# EUROPEAN PATENT APPLICATION

(11) **EP 1 679 891 A1**
(43) Date of publication of application: **12.07.2006**
(21) Application number: 04788097.6
(22) Date of filing: 24.09.2004
(51) Int. Cl.: H04N 5/76, H04N 5/91, H04N 5/225, G06F 12/00

(54) **VIRTUAL FILM PROVIDING METHOD, SERVER, AND MOBILE TERMINAL WITH CAMERA**

(30) Priority: 31.10.2003 JP 2003373826; 02.06.2004 JP 2004165101
(71) Applicant: KOKUYO CO., LTD., Higashinari-ku Osaka-shi, Osaka 537-8686 (JP)
(72) Inventor: SHIRAISHI, Yoshio, C/O Kokuyo Co., Ltd., Osaka-shi, Osaka 5378686 (JP); FURUICHI, Kazuko, Chiyoda-ku, Tokyo 1020085 (JP); SHINODA, Michiaki, Shinjuku-ku, Tokyo 1630510 (JP); MORITA, Shinichi, Chiyoda-ku, Tokyo 1020084 (JP)
(74) Representative: TBK-Patent
(86) International application number: PCT/JP2004/013938
(87) International publication number: WO 2005/043897

(57) **Abstract**

A concept of virtual film is introduced, thereby realizing a method for providing a novel, useful virtual film that allows the user to store photos without expending time and trouble and that reduces the post-processes so that the management at the server is easier. A mobile terminal (1) with a camera built therein is connected to a server (3) via an electronic communication line (2), such as the Internet, so as to request for using a virtual film (F) selected among several types (K) of virtual films prepared in the server (3) in advance, thereby storing, in the virtual film (F), the data of photos as taken. Then, for example, when the virtual film (F) is used up, the server (3) outputs the photo data stored in the virtual film (F) to an external storage medium (OM) so as to release the storage of the server (3) for reusing. In this way, the virtual film (F) can be used as if a single-use film.

## Description

### TECHNICAL FIELD

The present invention relates to a method for providing virtual film which is used by a mobile terminal with camera. The present invention also relates to a server and a mobile terminal with camera.

### BACKGROUND TO THE INVENTION

In recent years, mobile telephones with cameras are rapidly becoming popular. Because it is carried around everywhere all the time, there is a usefulness which is not present in digital cameras which are only carried when there is a special event.

However, the camera function of the mobile telephones in some ways has progressed as an extension of a toy camera. Its capacity is far from adequate. In particular, because pixel numbers have increased dramatically every year, even with improved memory capacity, a radical solution is needed.

Using the communication function of mobile telephones and the capability to connect to an electronic communication line such as internet and the like, the photo data which has been photographed can be received by a server on the web. This is stored in storage, and a service for printing is provided as needed (for example, refer to Patent reference 1)
Patent reference 1: Japanese Laid-Open Patent Number 2002-132923

### DISCLOSURE OF THE INVENTION

### PROBLEMS TO BE SOLVED BY THE INVENTION

However, with this service, the photo data must be organized by the user after storage, and the necessary images must be selected, and printing must be requested. This is inconvenient, and there is a tendency for the photos to be taken and forgotten. As a result, the effort to organize the images can dramatically increase. For the server, storage of a large capacity must be maintained, and the use of the storage service can become difficult.

The present invention focuses on these problems. The object of the present invention is to provide a virtual film providing method, server, and mobile terminal with camera in which by introducing a concept of virtual film, the user can store photos without expending time and effort. Post-processing is reduced so that management at the server is easier.

### MEANS FOR SOLVING THE PROBLEM

In order to solve the problems, the following means were used.
(A1) In other words, the present invention is a method for providing a virtual film, in which the method is implemented by connecting a mobile terminal with camera to a server through an electronic communication line, comprising: a request receiving step, in which the server receives a request for using a specific virtual film selected from among a plurality of types of virtual film displayed on the mobile terminal with camera; an allocating step, in which, in order to use the selected virtual film, the virtual film is associated with an identification information, and the server allocates a region for the virtual film; a photo data receiving step, in which, based on identification information of the virtual film, the server receives photo data as taken from the mobile terminal with camera; an outputting step, in which when the end of the virtual film is reached or subsequent to this, the server outputs the photo data associated with the identification information for the virtual film.
   Virtual film uses the memory region of a server but is given the attributes of the traditional silver salt film of the prior art. In other words, it has the attributes of being easy to acquire, records photographic content, and once it is used up, it is done. With implementing this method, the user puts in a usage request by selecting the type of virtual film from among several types of virtual film depending on the situation. After the server receives identification information of the corresponding virtual film, the photo data is transmitted to the virtual film identified by the identification information of this virtual film. As a result, storage of large volume photo data on the mobile terminal with camera is avoided. At the same time, the type of virtual film which is the storage site for the photo data is selected by the decision of the user at a time when motivation for the photo is high. The region corresponding to the selected virtual film is allocated on the server. As a result, for example, even when several types of virtual film are used, the storage conditions at the server are such that the data are automatically organized into types. There is no longer the inconvenience of different types of photos being stored at random. In addition, the virtual film is given the attribute of a film end. When the film end is reached, or subsequent to that, the photo data is automatically outputted. The user can use the virtual film in the same manner as a single-use film of the prior art. The inconvenience of pictures being taken and forgotten is avoided. The photo data of the photographs taken are maintained in reliable storage conditions.
(A2) Preferably, in order to notify the user that the request for using the virtual film has been received, there is a first display step in which, at least when the request for using the virtual film is received by the server, the identification information for the virtual film is displayed on the mobile terminal with camera.
(A3) In order to notify the user that the virtual film is used up, there is preferably a second display step in which, when the end of the virtual film has been reached or subsequent to this, the mobile terminal with camera displays that the virtual film of the identification information of the virtual film has been used up.
(A4) When the server receives the request for using the virtual film, there can be a transmission step in which the identification information corresponding to this virtual film is transmitted by the server to the mobile terminal with camera. The identification of the virtual film does not need to be acknowledged by the user as long as the mobile terminal with camera acquires it. There are advantages for assigning the identification information on the server-side.
(A5) In order to let the user know that the virtual film is used up, when the film end has arrived, or subsequently, there is preferably a second transmission step in which the server transmits to the mobile terminal with camera conveying that the virtual film with the aforementioned identification information is used up.
(A6) In order for the user to differentiate the virtual films accurately, preferably, in the request receiving step, the server receives the request for using a specific virtual film selected from among several types of virtual films that have already been classified and standardized by the server. The user does not need to conduct classification himself, and inconveniences resulting from inappropriate classifications can be avoided.
(A7) The plurality of types is preferably classified by genre of photos. Genre of photos are items that represent types of photos such as "regular or normal", "diary", "trip", "child", "family" and the like. These are determined in advance for easy classification. However, the types do not necessarily have to be able to be lumped together conceptually such as by genre, and they can be classified according to set criteria such as the number of photos received or the time period during which the photos are received.
(A8) When transmitting photo data and the like using the identification information of the virtual film, in order for the user to understand more readily, it is preferable to have a character string of the genre name included in the identification information for the virtual film.
(A9) This can be used in the same way as a single-use film, and the inconvenience of taking pictures and forgetting about them is avoided, and the photo data that has been photographed is stored reliably. For these advantages, a virtual film with a limiting film end is used, and a method for providing virtual film is implemented by a request receiving step, allocating step, photo data receiving step, and output step.
(A10) As a concrete implementation mode of the film end, an example includes one when the number of photos received reaches a specified number.
(A11) In this case, for the convenience of the user, it is preferable to have an intermediate display step in which, of the number of pictures that can be received, the number of pictures remaining in the virtual film is displayed on the mobile terminal with camera.
(A12) In addition, as a concrete implementation mode of the film end, an example includes regulating the end by the passage of a specified interval of time from a period of time for receiving photo data.
(A13, A14) For the output of the photo data, examples include when the data is output to an external storage medium or when the data is transmitted to a desired transmission destination through the electronic communication line.
(A15, A16) Of course, for the present invention, the usage requests and selection of virtual films can be conducted using an information processing terminal other than a mobile terminal with cameras, such as PCs and the like. In addition, the receiving of photo data can be conducted at any time (successively or all at one time). Even with these modifications, the essential action and effects of the present invention are not changed.
(A17) In addition, for the photo data receiving step, modes are possible in which the server receives photo data based on the identification information from several mobile terminals with cameras which share the same identification information for the virtual film.
(A18) In order to send the usage request from the mobile terminal with camera to the server, a client device which holds the address specifying information needed for accessing the server is connected to the electronic communication line. A notification step is implemented for notification of the address specifying information from this client device to the mobile terminal with camera.
(A19) In order to create an association between the mode of use of the virtual film and the client device, preferably, the usage request at the mobile terminal with camera includes client specifying information relating to the client device.
(A20) In order to conduct the usage request from the mobile terminal with camera to the server easily, a notification step from the client device to the mobile terminal with camera includes supporting data which is for supporting the usage request from the mobile terminal with camera to the server and includes information relating to the address specifying information and information relating to the virtual film such as type of virtual film and film end and the like.
(A21) In order to stimulate usage request from the mobile terminal with camera to the server, the notification of the address specifying information from the client device to the mobile terminal with camera is sent to e-mail addresses registered in advance on the client device.
(A22) Using the customer list of the client, there is an opportunity for the client to provide a new service for its customers. In addition to enhancing the services of the client, from the point of view of the customers, by having this service, customer expectations are higher, and there is increased incentive for subscribing to new products and services. In order to increase the overall popularity of virtual film, notification from the client device to the address specifying information of the mobile terminal with camera is preferably conducted with respect to e-mail addresses selected from the e-mail addresses already registered on the client device. There are various modes for carrying this out. In some cases, the relationship between the client and the virtual film of the customers is that the client ordinarily provides a service of virtual film to the customers, and as an extension, a free service of the virtual film is provided to the customers. Or in other cases, if the client ordinarily provides a totally different service for the clients, a free service is provided as a prize for the customers, and the like.
(A23) In order to develop opportunities for virtual film use from a source other than the client device, prize specifying information is stored on the server in advance. After the request receiving step or around that time, it is determined whether the request includes data relating to the prize specifying information. If the prize specifying information is included, a prize processing step is implemented.
(A24) In one example, the present invention is a server, in which the server is connected to a mobile terminal with camera through an electronic communication line, comprising: a means for receiving request, in which a request for using a specific virtual film selected from among a plurality of types of virtual film displayed on the mobile terminal with camera is received; a means for allocating, in which, based on the request, a region which corresponds to the virtual film and which can be identified by identification information for the virtual film is allocated; a means for film management, which receives photo data sent as taken from the mobile terminal with camera and stores the photo data in the corresponding region for the virtual film which is identified by the identification information and, in addition, at the least, manages the film end of the virtual film; a means for outputting, in which when the end of the virtual film is reached or subsequent to this, the photo data stored in the region of the virtual film is outputted; a means for canceling allocation, in which, when the film end managed by the virtual film management means is reached or subsequent to this, the allocation for the region for the virtual film is cancelled.
(A25) In another example, the present invention is a server, in which the server is connected to a mobile terminal with camera through an electronic communication line, comprising: a means for receiving request, in which a request for using a virtual film which has a limiting film end is received from the mobile terminal with camera; a means for allocating, in which, based on the request, a region which corresponds to the virtual film and which can be identified by identification information for the virtual film is allocated; a means for film management, which receives photo data sent as taken from the mobile terminal with camera and stores the photo data in the corresponding region for the virtual film which is identified by the identification information and, in addition, at the least, manages the film end of the virtual film; a means for outputting, in which when the film end, which is managed by virtual film management means, is reached or subsequent to this, the photo data stored in the region of the virtual film is outputted; a means for canceling allocation, in which, when the film end managed by the virtual film management means is reached or subsequent to this, the allocation for the region for the virtual film is cancelled.
   According to these servers, the virtual film has an attribute of a film end. The server allocates a region corresponding to the virtual film when there is a usage request. When the film end is reached, the photo data is outputted, and allocation of the region corresponding to the virtual film is relinquished through cancellation. As a result, the inconvenience of photo data being continually stored at the server without being used is avoided. By maintaining temporary storage conditions of the photo data, the turnover efficiency is increased, and the overall efficiency of the server is good.
(A26) An example of a concrete implementation mode for the film end includes when the virtual film management means regulating the film end to be when the number of photos received reaches a set number.
(A27) In addition, another example of a concrete implementation mode for the film end includes the virtual film management means regulating the film end of the virtual film by when a set interval of time has passed from a receiving time period for the photo data.
(A28, A29) For the output means, examples include copying or transferring to an external storage medium, or transmitting to a desired transmission address through an electronic communication line.
(A30) As a concrete implementation mode, the request receiving means receives a request for using a specific virtual film that is selected from among several types of virtual films that have already been classified. The allocation means allocates the region of the virtual film such that the region is identifiable by the identification information for the virtual film which includes the photo genre name.
(A31) In order to avoid storing a large amount of photo data in the mobile terminal, and in order to store the photo data so that it has already been classified by the user, at minimum, the request receiving step, first display step, and photo data receiving step must be implemented in order to effectively achieve the objectives.
(A32) In order to make the management of the identification information of the virtual film easier, when the request for using the virtual film is received by the server, even if a first display step which displays the identification information for the corresponding virtual film on the mobile terminal with camera is not implemented, the identification information for the corresponding virtual film is transmitted to the mobile terminal with camera from the server.
(A33) In order to reliably store the photo data, an output step is preferably implemented.
(A34, A35) With these, in order to let the user know that the use of the virtual film is at an end, it is preferable to implement a second display means and a second transmission means.
(A36) With regard to the construction of the mobile terminal, the present invention is a mobile terminal with camera, in which said mobile terminal with camera is connected to a server through an electronic communication line, comprising: a means for requesting use of virtual film, in which usage request data regarding a specific virtual film selected from among a plurality of types of virtual film is transmitted to the server; a means for transmitting photo data, in which selection input from the user with respect to identification information for said virtual film is received and photo data is transmitted to the virtual film of the server specified by the identification information.
(A37, A38) The virtual film usage request means preferably displays the identification information for the virtual film in the display part and receives, from the server, identification information for several types of virtual film which has been classified in advance.
(A39) In addition, with the mobile terminal with camera, a film end display means is advantageous. When the film end is reached or subsequent to this, the film end display means displays on the display part that the virtual film of the identification information is used up.

### ADVANTAGES OF THE INVENTION

As described above, according to the present invention, a concept of virtual film is introduced, thereby realizing a method for providing a novel, useful virtual film that allows the user to store photos without expending time and effort and that reduces the post-processing so that the management at the server is easier. The present invention also provides a server and a mobile terminal with camera.

### BRIEF DESCRIPTION OF THE DRAWINGS

Figure 1 is a block diagram of the system of the first embodiment of the present invention.
Figure 2 is a block diagram of the hardware for the mobile terminal with camera of the same embodiment.
Figure 3 is a block diagram showing the system structure of the same.
Figure 4 is a descriptive drawing for the same embodiment for describing the concept of the virtual film and the identification information.
Figure 5 is a block diagram of the hardware for the server of the same embodiment.
Figure 6 is a figure showing the contents of the data that is handled by the same embodiment.
Figure 7 is a flow chart showing the initial connection procedure for the same embodiment.
Figure 8 is a flow chart showing the virtual film usage request procedure for the same embodiment.
Figure 9 is a flow chart showing the photo data transmission procedure for the same embodiment.
Figure 10 is a flow chart showing the management procedure for the same embodiment.
Figure 11 is a system block diagram of a second embodiment of the present invention.
Figure 12 is a block diagram showing the system structure of the same embodiment.
Figure 13 is a block diagram of the hardware for the client device of the same embodiment.
Figure 14 is a figure showing the address specifying information of the same embodiment.
Figure 15 is a descriptive drawing for the same embodiment for describing the concept of the virtual film and the identification information.
Figure 16 is a flow chart showing the address specifying information notification procedure for the same embodiment.
Figure 17 is a block diagram showing the system structure of a third embodiment.
Figure 18 is a descriptive drawing for the same embodiment for describing the concept of the virtual film and the identification information.
Figure 19 is a figure showing the supporting data for the same embodiment.
Figure 20 is a flow chart showing a notification procedure for the supporting data for the usage request for the virtual film of the same embodiment.
Figure 21 is a block diagram showing the system structure of a fourth embodiment of the present invention.
Figure 22 is a drawing showing the contents of the data handled by this embodiment.
Figure 23 is a flow chart showing one part of a processing procedure for the same embodiment.

### DETAILED DESCRIPTION OF THE PREFERRED EMBODIMENTS

### <First embodiment>

Below, referring to the drawings, a first embodiment of the present invention is described.

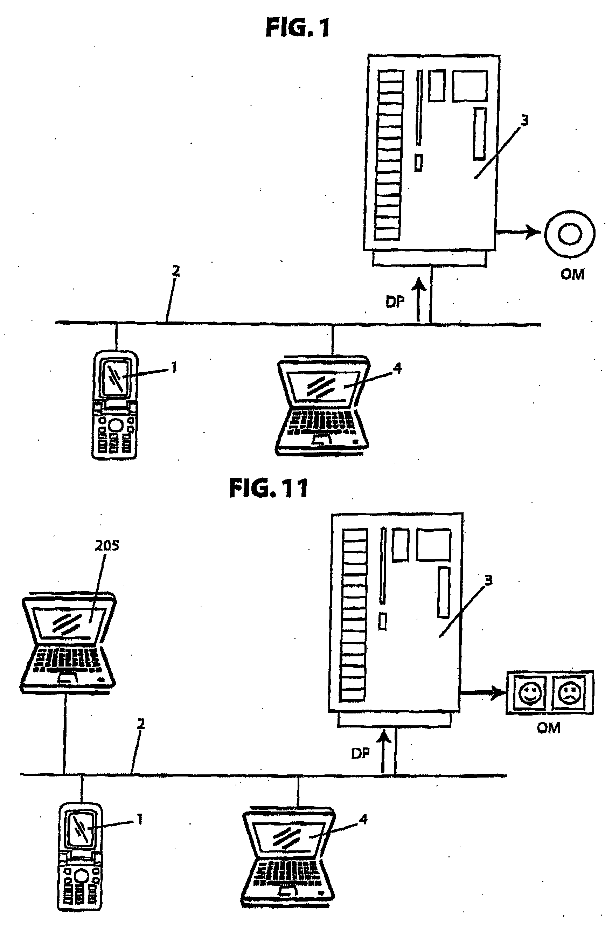

Referring to Figure 1, the system for implementing the method for providing virtual film of the present invention is constructed from a mobile terminal 1 with camera, an electronic communication line 2 such as the internet and the like, and a server 3.

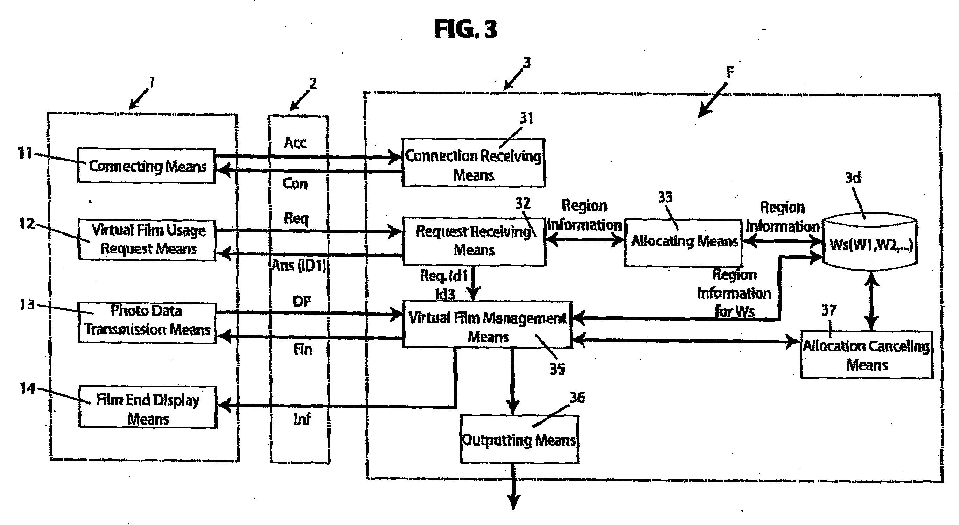

The summary of the system is as shown in Figure 3. A connecting means 11 of mobile terminal 1 with camera conducts a communication Acc in order to connect to server 3 through an electronic communication line 2 such as the internet or the like. The necessary data Con is acquired from a connection receiving means 31. A virtual film usage request means 12 of mobile terminal 1 with camera generates a usage request data Req with respect to the specific virtual film F selected from among several types of virtual film F prepared beforehand in server 3, and this is sent to server 3. This is received by server 3 by request receiving means 32. An allocating means 33 allocates a region Ws (W1, W2, ...) corresponding to the virtual film F within storage 3d. Request receiving means 32 generates a terminal-side identification information ID1 and a server-side identification information ID3 for virtual film F. The former is sent with usage data Ans to mobile terminal 1 with camera. Both are given to virtual film management means 35. At this time, the usage request data Req is also given. Afterwards, virtual film management means 35 records photographic data DP sent from mobile terminal 1 with camera onto region Ws (W1, W2, ...) corresponding to the virtual film F. Virtual film management means 35 manages the film end. When the virtual film has reached its end, an output means 36 copies or transfers the stored photographic data DP stored in virtual film F to an external storage medium OM such as CD-ROM or the like. The allocation canceling means 37 releases storage 3d in server 3 for re-use.

In the present embodiment, the concept of virtual film F is understood by server side identification information ID 3 and film attribute information and region Ws (W1, W2...) allocated within storage 3d. A concrete embodiment is described below.

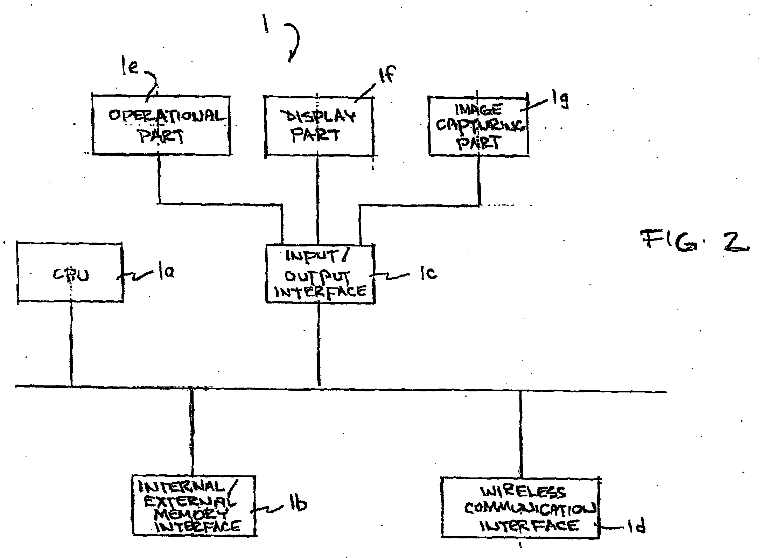

The basic construction for mobile terminal 1 with camera is known. Referring to Figure 2, this comprises a CPU1a, an internal/external memory device 1b such as RAM, ROM, EEPROM or the like, an input/output interface 1c, wireless communication interface 1d, and the like. Input/output interface 1c is connected with the following: an operational part 1e such as a ten-key button or the like, a display part such as a liquid crystal display or the like, and an image capturing part 1g which includes a CCD camera and the necessary optical elements. In addition to mobile phones, mobile terminal 1 with camera can be anything which can take pictures and send them on the spot such as PHS, digital camera with communication line, PDA with camera, and the like.

There are various programs and data stored in the internal/external memory devices 1b. CPU 1a reads these programs and data as required, and the data is exchanged with peripheral hardware resources or with an external device through wireless communication interface 1d, and operations and processing of the prescribed data is conducted. In other words, as shown in Figure 3, CPU1a, in conjunction with these peripheral hardware resources and the like, performs the roles of a connection means 11 for connecting the mobile terminal with camera to the server, a virtual film usage request means 12 for conducting the request for using virtual film F provided by server 3, a photo data transmission means 13 which transmits the photo data DP to virtual film F, and a film end display means 14 which displays the film end.

When mobile terminal 1 with camera is equipped with a voice input function or a touch panel input function, the voice input part or touch panel part with these functions are included in input/output interface 1c. If voice or other sounds are captured by the voice input part in conjunction with image capture, this voice data can be included as part of the photo data. If the image capture part 1g can also capture video, this video is also included as part of the photo data DP.

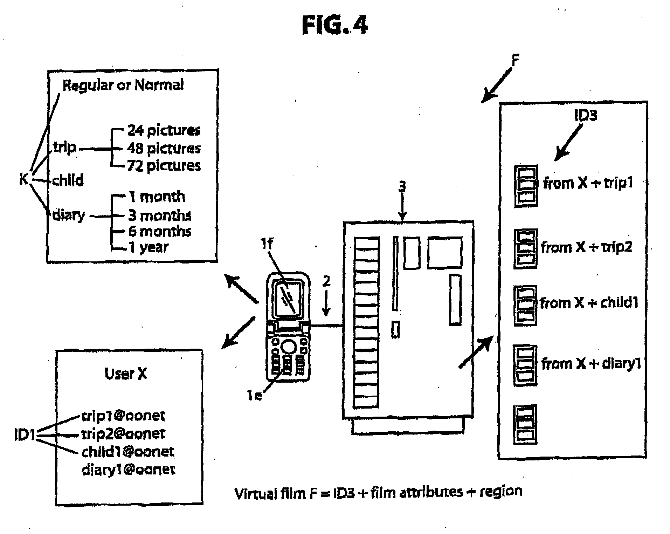

For connection means 11, if a URI (Uniform. Resource Identifier) is inputted or is pre-set, this is used to connect mobile terminal 1 with camera to server 3 via wireless communication interface 1d. For the URI, this also includes URL as a concrete example for a part of the function of the URI. Referring to Figure 3, the communication for the connection is represented as Acc. When data Con which is necessary for the usage request is received from server 3, this is stored in internal/external memory device 1b (see Figure 2), or this is displayed in display part 1f as shown in Figure 4.

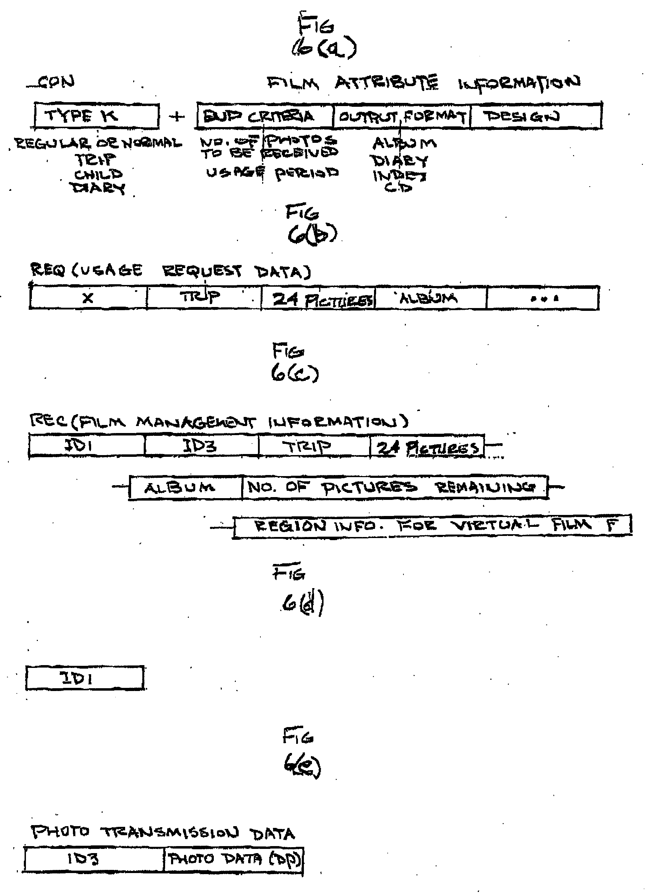

Figure 6(a) is an example of data Con corresponding to Figure 3 and 4 and is sent from server 3 and is necessary for generating usage request data Req. This data Con comprises selection items of classification by genre (regular or normal, trip, child, diary, and the like) of types K of virtual film F and film attribute information. The selection items for the film attribute information include items which select the end criteria relating to the film end (set number of pictures, set period of time, or the like), and items (album, diary, index, CD, and the like) for selecting an output mode (layout of output and the like). The set number of photos could be 24, 48, 72, and the like. The usage period could be 1 month, 3 months, 6 months, 1 year, and the like. The output format is the format when outputting the stored photo data DP. The design is the background design and the like of the photo.

For the virtual film usage request means 12, an algorithm relating to the generation of the usage request data Req is in the internal/external memory device 1b as part of a program. The virtual film usage request means assists in the sequential selection of the necessary items until the generation of the usage request data Req by displaying the selection input screen on display part 1f, and the like. For example, the user selects from types K →end criteria selection →output format selection →design selection. For example, usage request data Req shown in Figure 6(b) is a data example generated when "trip" is selected for virtual film type K , "24" is selected for the prescribed number of photos for the end criteria relating to the film end, and "album" is selected for the output format. Of course, other items that can be selected can also be included, or other items can be substituted. The header of the usage request data Req is given a terminal identification X for mobile terminal 1 with camera (for example, an individual number such as a telephone number for the terminal or some pre-set user ID, and the like). The usage request is received by request receiving means 32 of server 3 described later. Virtual film F is assigned a terminal-side identification information ID1 by usage request receiving means 32. As shown in Figure 3, the usage data Ans which includes identification information ID1 for virtual film F is transmitted, from the server, to mobile terminal 1 with camera. The virtual film usage request means 12 displays the terminal-side identification information ID1 of virtual film F shown in the left lower part of Figure 4 in display part 1f of mobile terminal 1 with camera.

The terminal side identification information ID1 of virtual film F has the format of an e-mail address such as "trip1@--net" "trip2@--net", "child1@--net" diary1@--net".

In other words, this e-mail address lets the user know that, when selected, the receiving file "trip1" "trip2" "child1" "diary1" is being accessed. However, for the actual receiving file, a character string to show that the access is from terminal identification X is added to the apparent receiving file, as in "fromX+trip1" "fromX+trip2" "fromX+child1" "fromX+diary1".

In the present embodiment, henceforth, the "fromX+trip1" "fromX+trip2" "fromX+child1" "fromX+diary1" will be referred to as the server side identification information ID3 for virtual film F. Of course, the server side identification information ID3 is not limited to the above.

In addition, an application which will transmit data only after confirming the remaining number of photos could be installed on the server. This could be preferable when photo data for several photos are being sent or when the volume of the photo data is large.

Referring to Figure 3, photo data transmission means 13 receives, from the user, the selection input regarding identification information ID1 for the virtual film. The photographed photo data DP is transmitted to the virtual film F specified by the identification information ID1. In other words, by the user selecting the identification information ID1 and taking pictures, or else by selecting the end button or send button after taking the picture, the photo data DP is sent to server 3 from mobile terminal 1 with camera. When transmission is successful, the photo data transmission means 13 receives a transmission complete information Fin from server 3.

When film end display means 14 receives notification inf from virtual film management means 35 of server 3 that virtual film F is used up, film end display means 14 displays this on display part If.

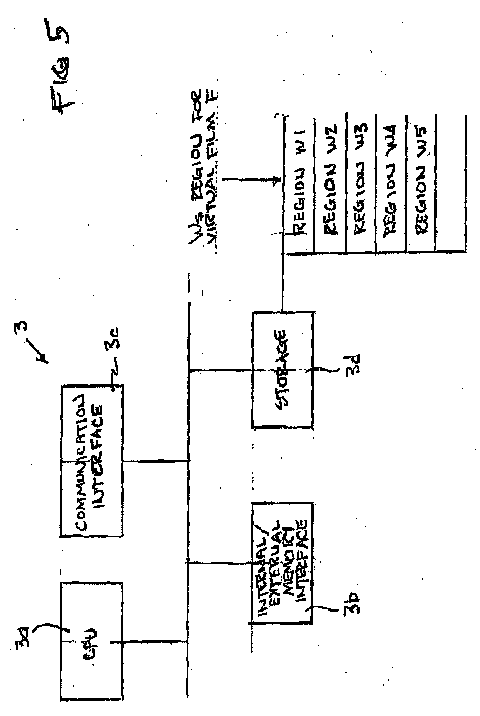

As shown in Figure 5, server 3 has a hardware construction in which the usual information processing device, comprising a CPU3a, internal/external memory device 3b, and communication interface 3c, has an additional exclusive storage 3d. Various programs and data are held in the internal/external memory device 3b. CPU3a reads these programs or data, and data exchange is conducted with internal/external memory device 3b and storage 3d or with an external device through a communication interface 3c, and the prescribed operations and processing of the data is carried out. In other words, CPU3a, in cooperation with peripheral hardware resources such as internal/external memory devices 3b and storage 3d, and the like, performs the role of connection receiving means 31, request receiving means 32, allocating means 33, virtual film management means 35, output means 36, allocation canceling means 37 shown in Figure 3.

When there is an initial connection from mobile terminal 1 with camera, connection receiving means 31 reads the data Con shown in Figure 6a which is necessary for the usage request and sends this back to mobile terminal 1 with camera. These data Con are stored at a site specified as the initial connection site within server 3, for example a specified site within internal/external memory device 3b such as index.html.

Request receiving means 32 receives the usage request data Req shown in Figure 6(b) from mobile terminal 1 with camera. For example, in the receiving file for the usage request, there is a program on standby which generates film management information Rec from the data contained in the usage request data Req, such as type K of virtual film F, film end, output format, and the like. By receiving the usage request, the program starts up. With the starting of this program, a terminal-side identification information ID1 (for example trip1@-net) and server side identification information ID3 (for example fromX+trip1) are issued for virtual film F, and the film management information Rec of Figure 6(c) is generated. For this management information Rec, the type K (for example "trip") and film attribute information (for example 24 photographs, album) selected by the user are added to identification information ID1, ID3, and these are further linked to the number of remaining number of photos (default of 24) and region information of region Ws allocated on storage 3d by allocating means 33 described next. As shown in Figure 4, terminal-side identification information ID1 (for example, trip1@--net) is transmitted to mobile terminal 1 with camera. Figure 6(d) is the transmitted data. When the end criteria are specified by a period of time, the amount of time remaining can be used instead of remaining number of photos. For the server side identification information ID3 and terminal side identification information ID1 for virtual film F, it is possible to use the same identification information.

Allocating means 33 shown in Figure 3 receives usage request data Req from request receiving means 32, and based on this usage request data Req, a region Ws corresponding to the number photos received for virtual film F is allocated within storage 3d. Region Ws (W1, W2,...) for virtual film F, and region information which specifies region Ws (W1, W2...) for virtual film F such as address, sector, and the like is returned to request receiving means 32. This allocated region is the region Ws of virtual film F described in this specification. Allocating signifies that region Ws on storage 3d is allocated and is in exclusive use until the time of cancellation. Therefore, when conducting a new allocation, only parts that have not been allocated and are not being exclusively used can be allocated.

Virtual film management means 35 receives usage request data Req for virtual film F, terminal-side identification information ID1, server-side identification information ID3, and region information relating to the allocated region Ws from request receiving means 32. Virtual film management means 35 generates film management information Rec shown in Figure 6(c) and manages it.

Virtual film management means 35 receives photo data DP sent to a specified e-mail address from mobile terminal 1 with camera. In the present embodiment, as shown in Figure 6(e), when photo data DP is being sent from mobile terminal 1 with camera, the photo transmission data includes server side identification information ID3 for virtual film F. With this ID3, it is possible to retrieve automatically, from film management information Rec of Figure 6(c), the region information for virtual film F which is the storage site for photo data DP. The received photo data is stored in region Ws of the corresponding virtual film F. With the storage of photo data DP, the "remaining number of photographs" part of the film management information Rec of Figure 6(c) is decremented by the number of photographs received. The default value for the remaining number of photographs is a set number that is set initially (24, 48, 72 ...), and this is reduced. If an appropriate application is installed on server 3, just prior to sending the photo data, it is possible to have an exchange confirming the ability to receive from the number of remaining photos.

In addition, virtual film management means 35 manages as to whether or not the film end has been reached. For example, in this embodiment, when the number of photo data DP received reaches a prescribed number, this is the film end. Stated more concretely, virtual film management means 35 retrieves the number of photos remaining from the film management information Rec when receiving photo data or during enquiry, and when this reaches 0, this is determined to be the film end. In other words, if the number of photos remaining is not 0, then photo data DP is received, and if it is 0, then it is returned to mobile terminal 1 with camera stating that photos are no longer accepted. Alternatively, when the type K of the virtual film F is "diary" or the like in which there is a set receiving time period, the virtual film management means 35 uses the internal clock and calendar function of CPU3a and inspects whether the receiving time period (1 month, 3 months, 6 months, 1 year and the like) has expired. Further, it is inspected for whether a set time interval (for example, 3 months) has passed since expiration. When the set time interval has passed, this is the film end. If the time interval is long, this is based on the reasoning that cutting off the user immediately is harsh. Conversely, when the time interval is short, the film end can be set so that the end is reached at the same time as the expiration of the receiving time period. In these situations, the film management information can be changed from the remaining number of photographs to remaining time interval.

When the film end is reached, virtual film management means 35 conducts notification Inf to mobile terminal 1 with camera that the virtual film F with the terminal side identification information ID1 is used up. Mobile terminal 1 receives this, and film end display means 14 displays, on display part 1f, that virtual film F is used up.

The film end can be managed while synchronized with mobile terminal 1 with camera. In addition, the display conveying that virtual film F is used up can be communicated by a direct message or it can be communicated through an indirect display. Examples of indirect display include making the color of the terminal side identification information ID1 of virtual film F shown at the left bottom of Figure 4 into a half-tone, having a double deletion line or a prohibited sign through it. Used up can mean permanently used up, or it can be handled as being capable of reuse after satisfying a set criteria.

When the film end is reported by virtual film management means 35, output means 36 automatically outputs the photo data DP stored in region Ws of virtual film F. Region Ws is within storage 3d and is identified by server side identification information ID3 of virtual film F. The output of photographic data DP is conducted with respect to an external storage medium OM such as CD-ROM, paper, DVD or the like. Alternatively, the output is to a specific transmission site (for example, a user address for a mail server 4 which is connected to electronic communication line 2 of Figure 1) through an electronic communication line 2. For the output format, data which specifies the output format such as "album", "diary", "index", "CD" and the like are obtained from film management information Rec of Figure 6(c). For "album" or "index", the display of thumbnails is advantageous for the output form. With allocation canceling means 37, after the film end is reported to virtual film management means 35 and output means 36 outputs the photo data DP, the allocation for region Ws, identified by server side identification information ID3, of virtual film F within storage 3d is cancelled. Canceling of allocation is conducted by erasing data within storage 3d, or, even if the data is not erased, by making the readout of the old data unnecessary, new data can be written over it and made readable. As a result, in film management information Rec shown in Figure 6(c), measures are taken to reset the region information relating to region Ws of virtual film F.

As described above, there is a second transmission step (step S10b) and a second display step (step S10g) for letting the user know that the film end has been reached. These steps do not have to be implemented immediately after reaching the film end, and there can be a time lag needed for processing. Alternatively, to be proactive, there can be a set interval of time, and the steps can be implemented after this time interval has passed. In addition, the canceling of the allocation can be conducted immediately after output by output means 36, or it can be conducted after a further prescribed time interval. For example, for situations when using a system which requests that the user output the data again, or the like, there may be times when the photo data DP needs to be stored for a certain amount of time after output. Therefore, the allocation canceling can be conducted at the same time as the film end is reached or it can be conducted at a time after the film end has been reached.

In addition, the canceling of the allocation of region Ws of virtual film F in storage 3d does not necessarily have to be the entire region Ws of virtual film F. When transmitting or displaying on mobile terminal 1 with camera that virtual film F of terminal side identification information ID1 is used up, it does not necessarily mean that the entirety is used up.

In the present embodiment, a charging means is preferably provided. For example, the usage request for virtual film F is received. When the terminal side identification information ID1 for virtual film F is transmitted to mobile terminal 1 with camera, the individual selection items have already been assigned charging terms. When the usage request Req is generated, the charges are totaled and reported to the user. If the charge total results and the usage request data Req are taken in together by server 3, the system can be carried out smoothly. Of course, it is possible to shown only the charging terms to the user, and the totaling of charges is conducted by server 3. For this, simple data for the charging terms and a sum calculating program is sufficient.

Next, a procedure for providing the virtual film of the present embodiment which is implemented based on the above construction is described.

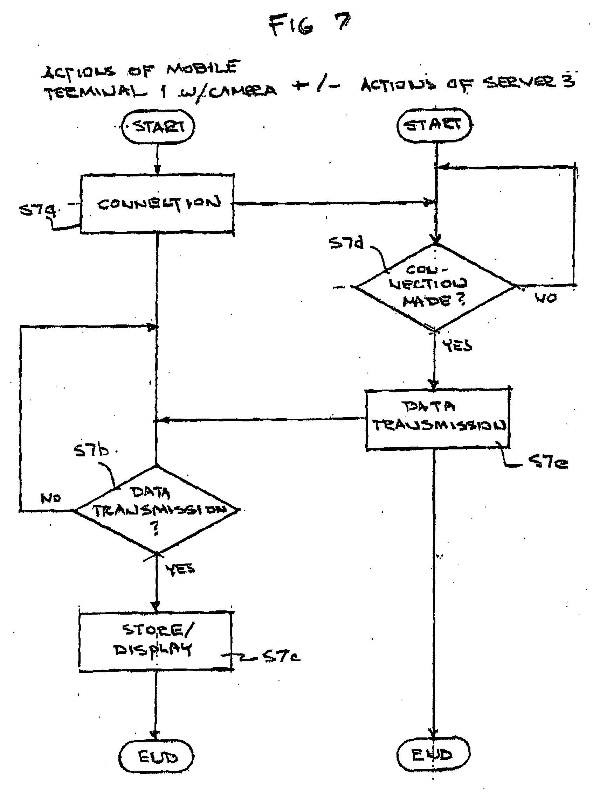

Figure 7 is a flow chart of an outline of programs executed in mobile terminal 1 with camera and server 3 for the initial connection. Server 3 awaits connection from mobile terminal 1 with camera (Step S7d). When there is a connection from mobile terminal 1 with camera to server 3 (Step S7a), server 3 transmits data Con, which is necessary for the usage request of virtual film F, to mobile terminal 1 with camera (Step S7e). After the connection, mobile terminal 1 with camera awaits (Step S7b) the transmission of data Con. When the data Con is received, this is stored in internal/external memory device 1b, and the terminal-side identification information ID1 for virtual film F is displayed on display part 1f (Step S7c), and then this is the end.

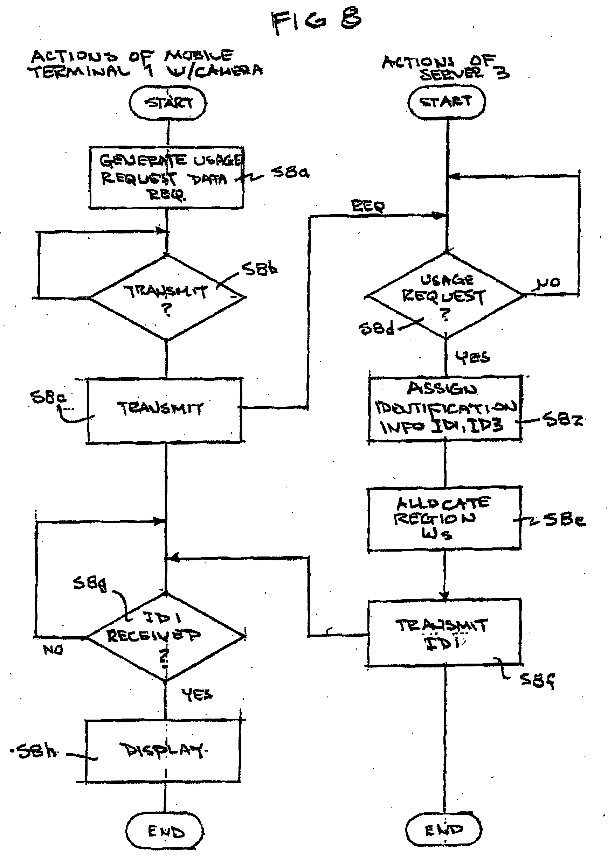

Figure 8 is a flow chart of an outline of programs executed in mobile terminal 1 and server 3 for requesting usage of virtual film F. Virtual film usage request means 12 generates usage request data Req (Step S8a) following a prescribed algorithm based on the selection input operation of the user. Awaiting a transmission command from the user (Step S8b), the usage request data Req is transmitted to server 3 (Step S8c). When server 3, which has been waiting the usage request, receives usage request data Req (Step S8d), the terminal side identification information ID1 and server side identification information ID3 of virtual film F is assigned (Step S8z). In storage 3d of server 3, allocation of region Ws with the server side identification information ID3 of virtual film F is conducted (Step S8e). The terminal side identification information ID1 for virtual film F is transmitted to mobile terminal 1 with camera (Step S8f). After sending usage request data Req, mobile terminal 1 with camera awaits the transmission of terminal side identification information ID1 (Step S8g), and once this is received, it is displayed on display part If (Step S8h), and then this is the end. Step S8d corresponds the request receiving step of the present invention. Step S8e corresponds to the allocation step of the present invention. Step S8f corresponds to the first transmission step of the present invention. Step S8h corresponds to the first display step. Furthermore, from Step S8d in which the usage request is received, there can be a step in which allocation means 33 determines whether or not there is enough available capacity in storage 3d, and once there is confirmation of available storage capacity, the allocation of the region (Step S8e) is implemented. In this situation, if there is no available capacity, this is stated in a response, or after a set waiting time, a decision is made again on whether or not there is available capacity.

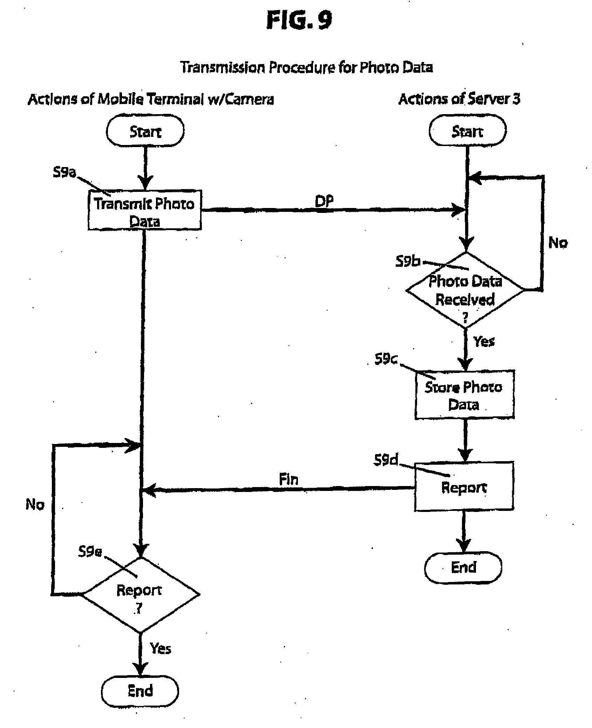

Figure 9 shows a flow chart of an outline of programs executed by mobile terminal 1 with camera and server 3 in order to transmit photo data. Server 3 awaits the transmission of photo data DP from mobile terminal 1 with camera (Step S9b). With an operation by the user, photo data DP is transmitted from mobile terminal 1 with camera (Step S9a). Server 3 stores photo data DP in the specified region Ws which has been allocated (Step S9c). Transmission completion information is transmitted to mobile terminal 1 with camera to report that transmission of photo data DP is completed (Step S9d). After transmitting photo data DP, mobile terminal 1 with camera awaits this report (Step S9e). When the report is received, this is the end. The aforementioned step S9b corresponds to the photo data receiving step of the present invention.

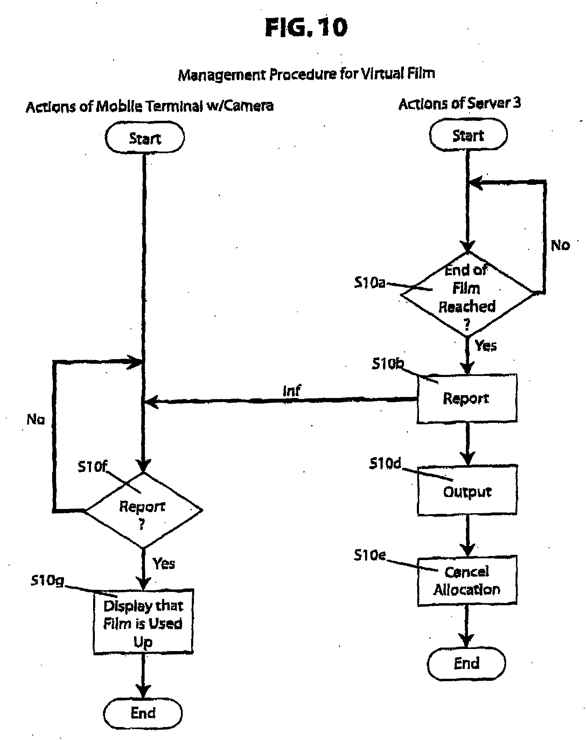

Figure 10 shows a flow chart of an outline of programs executed by mobile terminal 1 and server 3 for management of virtual film F. Server 3 monitors whether or not the film end has been reached periodically or with a prescribed timing (S10a). When it is determined that it is the film end, notification inf that the film has been used up is transmitted to mobile terminal I with camera (Step S10b). Mobile terminal 1 with camera awaits the report of film end (Step S10f), and when notification is received, film end display means 14 displays that virtual film F has been used up (Step S10g), and this is the end. Server 3, which has reported the film end, outputs photo data DP following a prescribed output format (Step S10d), the allocation of region Ws of storage 3d is canceled (Step S10e), and this is the end. Step S10b corresponds to the second transmission step of the present invention. Step S10d corresponds to the output step of the present invention. Step S10g corresponds to the second display step of the present invention. Step S10e corresponds to the allocation canceling step of the present invention. In addition, for example, if there is an additional function which directly or indirectly receives a separate request for saving certain photo data DP, allocation canceling of the region Ws for virtual film F of the parts other than the photo data DP of the save request is conducted, or else it is transmitted and displayed that the film is used up. For the procedure, when server 3 receives a save request for all or a part of virtual film F from mobile terminal 1 with camera, even when the film end is reached, there is a procedure for preventing the allocation canceling of the region Ws for virtual film F corresponding to the save request. As an example, this kind of processing of is conducted easily prior to step S10a which manages the film end in Figure 10. In addition, for the transmission and display stating that the film is used up, the film end can be determined by virtual film management means 35 when there is an enquiry or access from mobile terminal 1 with camera, and if it is the film end, then second transmission step S10b and display step S10g can be implemented.

As described in the beginning, with the present embodiment of the above construction and procedure, mobile terminal 1 with camera is connected to server 3 through electronic communication line 2 such as the internet or the like. There is a usage request for a specified virtual film F selected from among several types K prepared by server 3, and photo data DP is saved in this virtual film F. Once virtual film F is used up, server 3 outputs the photo data DP stored in virtual film F by burning a CD-ROM or the like, and storage 3d is released for reuse. Virtual film F is used in the same manner as a single-use film.

Below, concrete actions and advantages of the present embodiment are described in relation to the composition of the present invention. In these descriptions, there will be references to modifications.
(B1) First, the method for providing virtual film for the present embodiment implements, at minimum, the following steps: a request receiving step (Step S8d) in which, by connecting mobile terminal 1 with camera to server 3 through electronic communication line 2, the usage request with regard to a specific virtual film F (see Figure 4 right) selected from among several types K (see Figure 4 upper left) displayed on mobile terminal 1 with camera is received by server 3; an allocation step (Step S8e) in which in order to use the selected virtual film F, this is associated with the identification information of virtual film F, and server 3 allocates region Ws of the virtual film F; a photo data receiving step (Step S9b) in which photo data DP sent from mobile terminal 1 with camera is received by server 3 based on terminal side identification information ID1 of the virtual film F; and an output step (Step S10d) in which when the film end is reached or subsequently, server 3 outputs the photo data DP associated with terminal side identification information ID1 of virtual film F.
   Using this method, the user makes a usage request by selecting a type K from among several types K of virtual film F according to the situation. After server 3 receives terminal identification information ID1 corresponding to the virtual film F, photo data DP is sent to virtual film F identified by this terminal side identification information ID1. As a result, storing of large volume photo data DP on mobile terminal 1 with camera is avoided. At the same time, the selection of type of virtual film F is done by the user when motivation for taking the photo is high, and the user does not have to do the work later. In addition, because region Ws corresponding to the selected virtual film F is allocated in server 3, even if, for example, the user uses several of the type K of virtual film F, by conducting the selection of type K in advance, the photo data are stored automatically in a classified and organized manner within storage 3d. The inconvenience of storing various types of photo data DP at random is effectively eliminated. If there is an abundant line-up of types of virtual film F, this will be more in line with the expectations of the user. In addition, virtual film F is assigned end criteria which determines the film end. When the film end is reached or subsequently, the photo data DP is automatically outputted. This gives the user the feel of using single-use film and avoids the inconvenience of photos being taken and forgotten. The photo data DP is always outputted, and therefore this reliably avoids the possibility of important photos being lost.
(B2) In particular, this embodiment has a first display step (Step S8h) in which when usage request with regard to virtual film F is received by server 3, the terminal side identification information ID1 of virtual film F is displayed on mobile terminal 1 with camera. As a result, this lets the user know that the usage request with regard to virtual film F with has been received. Henceforth, the photo data DP can be transmitted easily using terminal-side identification information ID1.
(B3) In addition, this embodiment has a second display step (Step S10g) in which when the film end has been reached or subsequently, mobile terminal 1 with camera displays that the virtual film of the terminal identification information ID1 of virtual film F has been used up. As a result, the user is effectively notified that virtual film F has been used up.
(B4) In particular, in response to receiving the usage request, this embodiment has a transmission step (Step 58f) in which server 3 transmits terminal side identification information ID1 of virtual film F to mobile terminal 1 with camera. Because of this, server 3 conducts total management of the terminal side identification information 1 of virtual film F. Processes such as issuing, invalidating, and the like of terminal side identification information 1 is conducted accurately, and this effectively improves the reliability of the system. In addition, for expanding or modifying the contents of the service, this can be handled easily by server 3.
(B5) In addition, when the film end is reached or subsequently, there is a second transmission step (Step S10b) in which server 3 sends a transmission to mobile terminal 1 with camera that virtual film F of terminal side identification information ID1 has been used up. As a result, the user is reliably notified that virtual film F has been used up.
(B6) Request receiving step S8d implemented by the present embodiment receives the usage request with respect to a specific virtual film F (for example, virtual film F represented by "trip") selected from among several types K which have been classified in advance. As a result, the user is provided with types K which are classified into easy to understand types. There is no need for complex organizing, and the like, and virtual film F can be used properly without any effort. This is easy to use.
(B7) In the present embodiment, types K are classified according to representative genres for photos, such as trip, child, diary. This is advantageous because it reliably supports representative scenes in daily life that are opportunities for photos.
(B8) In particular, with this embodiment, terminal side identification information ID1 of virtual film F includes character string of the genre name such as "trip", "child", "diary". As a result, when using terminal side identification information ID1 of virtual film F as a clue for transmitting photo data DP and the like, the user can perceive it easily, and this improves the ease of use.
(B9) Of course, a simple construction can be used where virtual film F is not classified into types K and photo data is stored in a single type. In this case, virtual film F is limited by a film end. Photo data DP is received and stored, but once virtual film F is used up, with output step S10d and display S10g, the photo data DP is outputted and at the same time, it is clear that the film has been used up. As a result, this has the advantage of being used in the same manner as a single use film, and the inconvenience of photos being taken and then forgotten is avoided. The photo data DP is also stored reliably. With this situation as well, modifications in which display step S8H is omitted are possible.
(B10) In addition, in the present embodiment, one mode of the film end is to have the film end be when a certain number of photos have been received. This can seem like fragmenting of storage when there is such large-scale capacity today and may seem like an idea which ignores the utility of the progress in storage capacity. However, this creates a film in the virtual world which has the same feel as a single-use film of the prior art, and it has a large advantage of giving simplicity and clarity of usage.
(B11) Although not included in the present embodiment, for the convenience of the user, there can be an intermediate display step. With the intermediate display step, the number of pictures remaining in the virtual film is displayed on mobile terminal 1 by a function in server 3 or in mobile terminal 1 itself. This is similar to the display in traditional cameras showing the number of pictures remaining. This gives mobile terminal 1 a function more like a camera. With the former, photo data DP is stored with Step S9c, the number of photos received recorded in film management information Rec is incremented, and data on the remaining number of pictures is retrieved and transmitted to mobile terminal 1 with camera. With the latter, the number of photos is counted by mobile terminal 1 with camera by synchronizing with photo data transmission Step S9a or step S9d which receives the report of transmission complete.
(B12) In addition, as given as an example for an item of type K of virtual film F of the above embodiment, when type K of virtual film F is "diary", the time period for accepting pictures is set as a certain interval (year, month). The film end is considered to be when a prescribed interval after this time period has passed. However, when using virtual film F, when a one-year diary of photos is completed, depending on the output format, the photo data DP is output in the form of printing to a diary notebook or the like. The effect, which corresponds to the act of pasting photos in a diary of the prior art, is achieved easily. When "diary" is selected, text is transmitted to server 3 in Step S9a together with photo data DP. Server 3 associates text with photo data DP and stores these in region Ws of virtual film F. Video and sound and the like can also be similarly combined.
(B13), (B14) For the output, there are modes which output to an external storage medium such as CD-ROM, DVD, paper, and the like. In addition, there are modes which output, through electronic communication line 2, to a transmission destination such as an e-mail address designated by the user. Modes in which the output is transmitted directly to the user's PC by telnet and the like are also possible.
(B24) In one example, the present embodiment is a server, in which the server is connected to a mobile terminal 1 with camera through an electronic communication line 2, comprising: a means 32 for receiving request, in which a request for using a specific virtual film F selected from among a plurality of types K of virtual film F displayed on the mobile terminal 1 with camera is received; a means 33 for allocating, in which, based on the request, a region W, within storage 3d, which corresponds to the virtual film F and which can be identified by server-side identification information ID3 for the virtual film is allocated; a means 35 for film management, which receives photo data PD sent as taken from the mobile terminal 1 with camera and stores the photo data PD in the corresponding region Ws for the virtual film F which is identified by the server-side identification information ID3 and, in addition, at the least, manages the film end of the virtual film F; a means 36 for outputting, in which when the end of the virtual film F is reached or subsequent to this, the photo data PD stored in the region Ws of the virtual film F is outputted; a means 37 for canceling allocation, in which, when the film end managed by the virtual film management means 35 is reached or subsequent to this, the allocation for the region Ws for the virtual film F is cancelled.
(B25) Alternatively , the present embodiment is a server, in which the server 3 is connected to a mobile terminal 2 with camera through an electronic communication line 2, comprising: a means 32 for receiving request, in which a request for using a virtual film F which has a limiting film end is received from the mobile terminal 1 with camera; a means 33 for allocating, in which, based on the request, a region W, within storage 3d, which corresponds to the virtual film F and which can be identified by server-side identification information ID3 for the virtual film F is allocated; a means 35 for film management, which receives photo data PD sent as taken from the mobile terminal 1 with camera and stores the photo data PD in the corresponding region Ws for the virtual film F which is identified by the server-side identification information ID3 and, in addition, at the least, manages the film end of the virtual film F; a means 36 for outputting, in which when the film end, which is managed by virtual film management means 35, is reached or subsequent to this, the photo data PD stored in the region Ws of the virtual film F is outputted; a means 37 for canceling allocation, in which, when the film end managed by the virtual film management means 35 is reached or subsequent to this, the allocation for the region Ws for the virtual film F is cancelled.
   Of course, output means 36 and allocation canceling means 37 can conduct the aforementioned processes at the same time as the arrival of the film end.
   In this manner, with server 3 of the present embodiment, virtual film F is given an attribute of a film end. When there is a usage request, region Ws of virtual film F is allocated within storage 3d. When the film end is reached, photo data DP is outputted, and storage 3d is returned by the canceling of region Ws of virtual film F. Because of this, the inconvenience of photo data being continually stored at the server without being used is effectively avoided. By conducting a temporary storage service, the turnover efficiency is increased, and the overall efficiency of storage is good.
(B26) With virtual film management means 35, when the film end is determined to be when a prescribed number of photos is reached, the advantages are the same as described in (B10).
(B27) In addition, with virtual film management means 35, when the film end is controlled to be after a set time interval has passed from a time period for receiving photo data DP, the advantages are the same as described in (B12).
(B28), (B29) The mode of output by output means 36 is the same as in (B13), (B14) described previously.
(B30) In the present embodiment, request receiving means 32 receives the usage request with regard to a specific virtual film F selected from among a plurality of types classified in advance. Allocating means 33 allocates region Ws of virtual film F within storage 3d, and region Ws is identifiable by server side identification information ID3 of virtual film F which includes the genre name of the photo. As a result, this is an advantages construction for seeking out ways to provide a more complete service for the user and a more efficient use of the system. For example, during use, the user could request to inspect photo data which has been stored, or there could be modifications to the types K of virtual film F by substituting with those which are used with higher frequency.
(B31) Of the aforementioned, an advantageous effect is achieved by implementing, at minimum, a request receiving step (Step S8d), a first display step (Step S8h), and a photo data receiving step (Step S9b). In other words, by having the user select from types K of virtual film F, and by having a procedure for receiving and storing photo data DP in each category K, storage of large volumes of photo data DP on mobile terminal I with camera is avoided. In addition, photo data DP is stored in an automatically organized manner. As a result, post-processing by the user is dramatically easier.
(B32) Alternatively, if a first transmission step (Step S8f) is implemented in place of or together with first display step (Step S8h), it is possible for server 3 to conduct the total management of terminal-side identification information ID1 of virtual film F.
(B33-B35) Furthermore, if, in addition, the output step (Step S10d) and second display step (Step S10g) are implemented, the advantages described in each of the sections of the above embodiments are achieved.
(B36) Mobile terminal 1 with camera of the present embodiment connects with server 3 through electronic communication line 2. Mobile terminal 1 with camera comprises: a virtual film usage request means 12 in which usage request data Req regarding a specific virtual film selected from several types K of virtual film is transmitted to server 3; and a photo data transmission means 13 which receives the selection input from the user with regard to the identification information ID1 of the virtual film and which transmits the photo data DP to the virtual film F of server 3 specified by identification information ID1. With this, the above advantages are made possible.
(B37, B38) Furthermore, with virtual film usage request means 12, identification information ID1 of virtual film F is displayed in display part If, or alternatively, identification information ID1 of virtual film F from several types K classified in advance by server 3 is received. Because of this, the user can accurately recognize virtual film F which has no substance, and this makes it easy to use.
(B39) Furthermore, there is a film end notification means, in which, when the film end is reached or subsequently, there is a displayed on display part 1f that virtual film F of identification information ID1 is used up. As a result, the advantages are further heightened.

The concrete construction of each part is not limited to the embodiments described above. Various modifications are possible without departing from the spirit of the present invention.

For example, in the embodiment described above, server 3 issued the identification information of virtual film F according to the usage request. However, an identification information generating program can be stored on mobile terminal 1. Using individual information such as phone number of mobile terminal 1 and category K of virtual film F, unique identification information for film F is generated. In addition, in the above embodiment, the film end is determined by a set number of photos received or a set period of time. However, there can be an additional step in which a film end is forced on virtual film F when certain conditions are met. For example, there can be a forced film end with usage conditions in which, even though the prescribed number of photos has not been reached, the photos have been left for a long time, or in situations when continuation is not appropriate due to certain circumstances such as excessive non-payment of accounts. The release of storage 3d will prevent any disadvantages to other users. Furthermore, in the above embodiment, when the film end is reached, there was a transmission to mobile terminal 1 from server 3 of notification inf which informed of the film end. However, this notification inf can be performed at an appropriate timing after reaching the film end. In addition, when managing the film end synchronously at mobile terminal 1 with camera, even without receiving the transmission, the film end display means can conduct the display in display part 1f.

With the method and server of the present invention, if the mobile terminal with camera is replaced with mobile terminal and the photo data is replaced with acquired data, the usage can be expanded from the photo data to data used for other objectives and uses. We will give an example of a representative method and construction of this.
(A42) A method for providing a virtual film, comprising: a request receiving step in which usage request regarding a specific virtual film selected from among several types of virtual film displayed on a mobile terminal which connects with a server through an electronic communication line is received by the server; an allocation step in which, in order to make the selected virtual film usable, identification information for the virtual film and a region for the virtual film are allocated by the server; an acquired data receiving step, in which acquired data is received by the server from the mobile terminal based on the identification information of the virtual film; an output step in which, when the film end is reached or subsequently, the acquired data associated with the virtual film of the identification information is outputted.
(A43) A method for providing a virtual film, comprising: a request receiving step in which usage request regarding a virtual film limited by a film end is sent from a mobile terminal which connects with a server through an electronic communication line and is received by the server; an allocation step in which, in order to make the selected virtual film usable, identification information for the virtual film and a region for the virtual film are allocated by the server; an acquired data receiving step, in which acquired data is received by the server from the mobile terminal based on the identification information of the virtual film; an output step in which, when the film end is reached or subsequently, the acquired data associated with the virtual film of the identification information is outputted.
(AA44) A server, comprising: a request receiving means which receives usage request regarding a specific virtual film selected from among a plurality of types of virtual film displayed on a mobile terminal which is able to connect to the server through an electronic communication line; an allocating means, which allocates in the server a region which corresponds to the virtual film and which is identifiable by server side identification information of virtual film F based on the usage request; a virtual film management means, which receives acquired data sent at any time from the mobile terminal and stores the acquired data in the region of the virtual film which is identified by server side identification information and also manages the film end of the virtual film; an output means in which, when the film end managed by the virtual film management means is reached or subsequently, the acquired data stored in the region of the virtual film is outputted; an allocation canceling means in which, when the film end managed by the virtual film management means is reached or subsequently, the allocation for the region for the virtual film is canceled.
(B42-B44) By expanding the purpose of the above server and method, the present invention can be used for virtual film providing methods and servers which include modes that store only music downloads.

In this situation, the mobile terminal with camera that is equipped with an image capturing part is replaced with a mobile terminal equipped with a data acquiring part such as for sound, and photo data is replaced with acquired data. The only difference is the type of data, and the same advantages and effects are achieved as the above embodiment. For example, data acquired from lectures, performances, meetings and the like are stored, or sounds from street corners can be stored. The present invention can be used for various objectives and uses.

### <Second embodiment

Referring to the drawings, a second embodiment of the present invention is described.

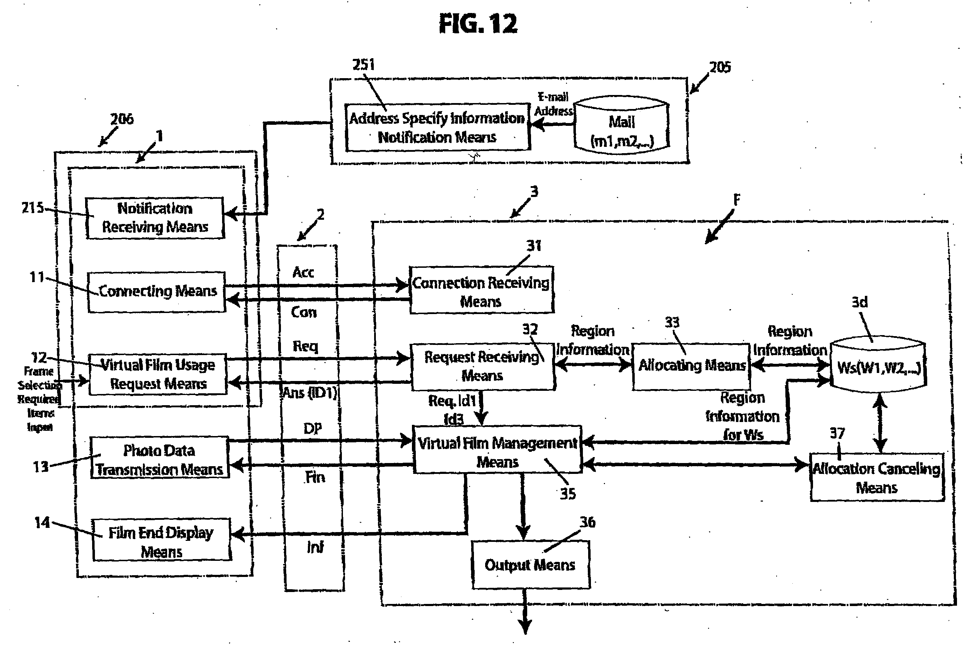

As shown in Figure 11, a system for implementing the virtual film providing method of the present invention is mainly constructed from mobile terminal 1 with camera, an electronic communication line 2, a server 3, and a client device 205.

This embodiment has a system similar to the first embodiment in which mobile terminal 1 with camera and server 3 are connected by electronic communication line 2, photo data DP photographed by mobile terminal 1 is stored in region Ws (see Figure 12) corresponding to virtual film F allocated in storage 3d of server 3, and afterwards the photo data is outputted to the outside. A client device 205 which is equipped with an address specifying information notification means 251 is added via electronic communication line 2. Mobile terminal 1 with camera which receives notification of address specifying information Adr from client device 205 uses the address specifying information to send photo data DP to server 3. At server 3, the photo data DP is stored in virtual film F, and the stored photo data DP is outputted to the outside. In this situation, the category selection (frame selection) for the virtual film is conducted at the mobile terminal 1 with camera which has been notified by client device 205. The output is in the form of a printed postcard. This postcard is within the general concept of the external storage media OM. In addition to CD-ROM and the like, the external storage media OM can be printing objects such as albums and the like

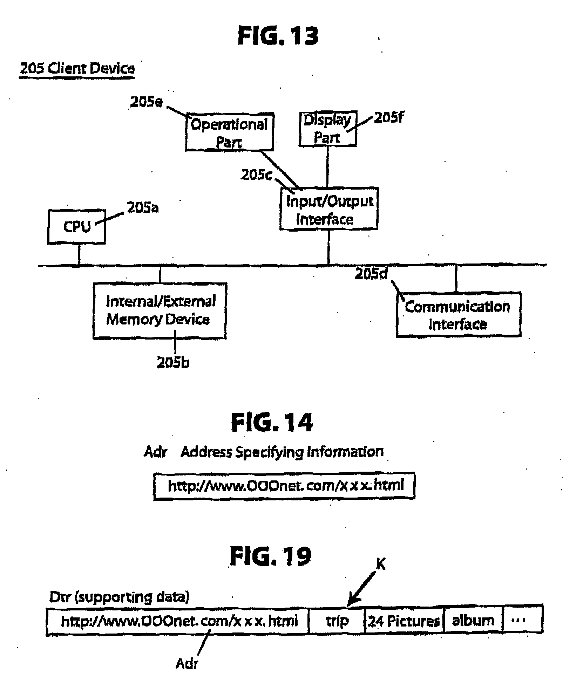

Figure 12 shows an outline of this system. A specific e-mail address Mail (see Figure 14) is automatically selected from among the plurality of e-mail addresses Mail (m1, m2, ...) stored in client device 205. From the address specifying information notification means 251, address specifying information Adr is sent to the mobile terminal 1 with camera with the e-mail address Mail. This e-mail address Mail is registered already in internal/external memory device 205b (see Figure 13) as part of the customer information for the client. The notification is received, and mobile terminal 1 with camera records the address specifying information Adr in internal/external memory device 1b. Based on the address specifying information Adr, mobile terminal 1 with camera connects with server 3 by connection means 11. Hereafter it is the same as the previous embodiment. Virtual film usage request means 12 transmits usage request data Req regarding virtual film F to server 3. Server 3 receives data Req, and allocating means 33 allocates region Ws to the corresponding virtual film F within storage 3d. Request receiving means 32 generates terminal side identification information ID1 and server side identification information ID3 for the virtual film. Afterwards, virtual film management means 35 records the photo data DP sent from mobile terminal 1 with camera in the virtual film and also manages the film end. Once the film F is finished, output means 36 outputs the photo data DP stored in virtual film F in the form of printing to a post card. Allocation canceling means 37 releases storage 3d of server 3.

In the present embodiment, the concept of virtual film is the same as in the first embodiment and is encompassed by server side identification information ID3, film attribute information, and region Ws (W1, W2,...) allocated within storage 3d. The present embodiment will be described concretely below. In addition, descriptions for parts which overlap with the first embodiment will be omitted, but those parts will have the same function as in the first embodiment.

Client device 205 is equipped with a CPU 205a, an internal/external memory device 205b, an input/output interface 205c, and communication interface 205d. Internal/external memory device 205b has various programs and data. An operation part 205e such as a keyboard and mouse or the like and a display part 205f such as a monitor or the like are connected with input/out interface 205c. CPU reads the programs and data, and data exchange is conducted between CPU205a and internal/external memory device 205b or between CPU205a and an external device via communication interface 205d. CPU205a conducts prescribed operations and processes. In other words, CPU205a, together with these peripheral hardware resources and the like, performs the role of address specifying information notification means 251 shown in Figure 12.

Address specifying information notification means 251 sends notification of address specifying information Adr to a specific e-mail address Mail automatically selected from e-mail addresses Mail (m1, m2, ...) already registered in internal/external memory device 205b of client device 205. The address specifying information Adr is sent to the specific e-mail address Mail by input into e-mail or as an attachment through electronic communication line 2 such as the internet or the like. The selection method for specific e-mail addresses are, for example, total selection or partial selection. Partial selection can be a statistical selection such as lottery or a mechanical selection following specific standards/conditions.

As shown in Figure 14, address specifying information Adr is a URI which allows for mobile terminal 1 with camera to connect with server3 and request a virtual film F. As in the first embodiment, this URI includes URL which is a concrete specification for part of the function of URI.

The basic construction of mobile terminal 1 with camera is the same as that shown in Figure 2 as the first embodiment, and the description is omitted here.

CPU1a of mobile terminal 1 with camera, together with the peripheral hardware resources such as internal/external memory device 1b, input/output interface 1c, wireless communication interface 1d, and the like, perform the role of notification receiving means 215, which receives address specifying information Adr from client device 205; connection means 11 for connecting mobile terminal 1 with camera to server 3; virtual film usage request means 12 for performing the usage request regarding virtual film F provided by server 3; photo data transmission means 13 for transmitting photo data DP to virtual film F; and film end display means 14 for displaying the film end.

Each of the means described above in mobile terminal 1 with camera is described below. However, with regard to film end display means 14, this has the same function as in the first embodiment, and therefore the description will be omitted.

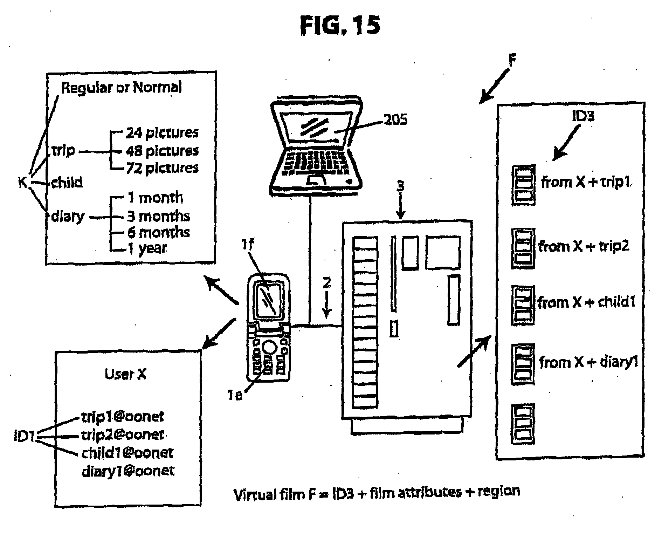

Connection means 11 inputs the URI which is the address specifying information Adr received by notification receiving means 215. Alternatively, when the URI noted in an e-mail from client device 205 can be used, this is used. From connections means 11, mobile terminal 1 with camera connects with server 3 via wireless communication interface 1d. Referring to Figure 12, the communication conducted for the connection is represented as Acc. Data Con which is necessary for the usage request is retrieved from server 3 and stored in internal/external memory device 1b (see Figure 2). Alternatively, this is displayed in display part 1f as shown in Figure 15.

Using an algorithm for generating usage request data Req, virtual film usage request means 12 supports the selection by the user of necessary items by displaying a selection input screen on display part 1f until usage request data Req is generated.

For example, the usage request data Req of Figure 6(b) is a data example generated when category K of virtual film F, film end criteria relating to the film end, output format are selected (shown in order, starting from next to the header). In this example, the design is not selected. Of course, the items for selection can include other items. Alternatively, other items can be substituted. In addition to selection items such as category, end criteria, output format, and the like, usage request data Req also includes necessary input items such as the output destination or sending destination for photo data DP and the like.

The header for usage request data Req is assigned terminal identification X of mobile terminal 1 with camera (for example, the phone number of the terminal, or other characteristic number, or a user ID which has already been pre-set).

The terminal identification X assigned to the header of the usage request data Req indicates the user of virtual film F. When there are multiple users, there does not necessarily have to be terminal identification X. In other words, the identification number can be for identifying the group which share virtual film F.

In addition, although not shown in the present embodiment, other than the header which is assigned terminal identification X, a part of usage request data Req can be assigned the transmission source for the e-mail which is received by notification receiving means 215 as client specifying information relating to client device 205. With this, client device 205 connects with server 3 and searches usage request data of terminal identification X with client specifying information. For the users who have been notified the address specifying information Adr, confirmation is made whether or not there has been at least a usage request for virtual film. If there is no confirmation of usage request, the user can be notified again of the address specifying information Adr in order to improve usage efficiency for virtual film F. If there is confirmation of usage request, as described later, the client specifying information can be used for charging information and the like for virtual film F of the user.

The usage request is received by usage request means 32 of server 3. Usage request means 32 assigns identification information for virtual film F. As shown in Figure 12, use data Ans, which includes identification information ID1 for virtual film F, is transmitted to mobile terminal 1 with camera. After receiving use data Ans, mobile terminal 1 with camera displays terminal identification information ID1 for virtual film F on display part 1f.

As shown in Figure 15, in order to let the user know that there will be access with a receiving file, terminal side identification ID1 of virtual film F has a display format which is a combination of the receiving file name and the domain name of server 3 and which is similar to e-mail addresses such as "trip1@--net". "trip2@--net", "child1@-net", "diary 1@--net".

However, for the actual receiving file, in addition to the apparent receiving file, there is additional text showing that this is access from terminal identification X, such as "fromX+trip1", "fromX+trip2", "fromX+child1", "fromX+diary1", so that the transmission source and the transmission destination correspond. In the present embodiment, henceforth, the receiving file which is a combination of terminal identification X and terminal side identification information ID1 will be referred to as server-side identification information ID3 for virtual film F. In addition, when a plurality of mobile terminals 1 with cameras share virtual film F, terminal identification X for individual mobile terminal 1 with camera does not have to be used, and instead, a shared identification can be used by the plurality of mobile terminals 1 with cameras. Using the shared identification, a mode is possible where the receiving file is a combination of this shared identification and terminal side identification information ID1.

For the present embodiment, notification receiving means 215, connection means 11, virtual film usage request means 12 described above are implemented by mobile terminal 1 with camera. However, an information processing terminal 206 (the region surrounded by the alternate long and two short dashes line in Figure 12) such as a personal computer used by the user can be substituted for mobile terminal 1 with camera. With this, the e-mail addresses Mail (m1, m2...) stored in client device 205 do not need to be for mobile terminal 1 with camera. The address specifying information Adr for usage request of virtual film F can be sent to mobile terminal 1 with camera as well as other information processing terminals 206. This can stimulate usage request for virtual film from a wide range of people.

Photo data transmission means 13 shown in Figure 12 is the same as described for the first embodiment. The user selects identification information ID1 for the desired virtual film F, and the photographed photo data DP is transmitted to the virtual film specified by the identification information ID1. In particular, better photos selected from among the photographed photos can be transmitted at once. For the convenience of the user, in addition to being able to send photo data DP individually, photo data DP can be sent as a batch to virtual film F.

In addition, by sharing identification information ID1 with a plurality of mobile terminals 1 with camera, photo data DP can be sent from a plurality of mobile terminals 1 with cameras, or in other words, from a plurality of users, to a virtual film F specified by identification information ID3.

Because server 3 has the same construction as that of the first embodiment shown in Figure 5, its description is omitted. CPU3a inside server 3, together with peripheral hardware resources such as internal/external memory device 3b and storage 3d and the like, performs the role of connection receiving means 31, request receiving means 32, allocating means 33, virtual film management means 35, output means 36, allocation canceling means 37 shown in Figure 12.

With regard to each of the means in server 3 described above, the descriptions for connection receiving means 31, allocating means 33, output means 36, allocation canceling means 37 are omitted, but their functions are the same as those described in the first embodiment. Request receiving means 32 and virtual film management means 35 are described below.

Request receiving means 32 receives usage request data Req shown in Figure 6(b) from mobile terminal 1 with camera. As described in the first embodiment, by a program which is executed when the usage request data Req is received, terminal side identification information ID1 (for example trip1@--net) and server-side identification information ID3 (for example fromX+trip@--net) for virtual film F are issued based on usage request data Req, and film management information Rec of Figure 6(c) is generated. As shown in Figure 15, terminal-side identification information ID1 for virtual film F is transmitted to mobile terminal 1 with camera. Figure 6(d) is this transmission data.

For film management information Rec, category K ("trip" for example) and film attribute information (for example "24", "album") selected by the user is added to the identification information ID1, ID3. In addition, film management information Rec also includes the remaining number of pictures (default of 24) and region information for region Ws which has been allocated on storage 3d by allocating means 33. The items included in film management information Rec are not limited if there are other items that are necessary for the convenience of the virtual film management.

In particular, by including client specifying information as mentioned in the description for virtual film usage request means 12, this can improve the user rate for virtual film F as described previously. In addition, this does not require complex processing. This is particularly easy to achieve when the usage request is conducted using address specifying information Adr which is sent by client device 205. As described previously, client specifying information is assigned to usage request data Req. Film management information is generated based on data from usage request data Req. Therefore, by receiving usage request data Req which has an assigned client specifying information, it is easy to include the client specifying information in film management information Rec. The processing can be implemented together with the generation of film management information Rec just by adding a variable corresponding to the client specifying information in the program for generating film management information Rec.

Film management means 35 manages film management information Rec comprising usage request data Req for virtual film F received from request receiving means 32, terminal-side identification information IDI, server-side identification information ID3, and region information regarding allocated region Ws.

Film management means 35 transmits photo data DP from mobile terminal 1 with camera to a specified e-mail address. In the present embodiment, as shown in Figure 6(e), the photo transmission data in which photo data DP is sent from mobile terminal 1 with camera includes server side identification information ID3 for virtual film F. By using this ID3, it is possible to automatically retrieve the region information for virtual film F, which is the storage site of photo data DP, from film management information Rec of Figure 6(c). The transmitted photo data DP is stored in the corresponding region Ws of virtual film F.

In addition, the photo data DP being received is transmitted according to the decision of the user. The photo data DP is not necessarily received at a fixed time interval or as a fixed volume. Because of this, by receiving photo transmission data comprising server side identification information ID3 and a plurality of photo data DP, a plurality of photo data DP can be transmitted as a batch from mobile terminal 1 with camera.

In addition, when a plurality of mobile terminals 1 with cameras share the virtual film F, the photo transmission data that is transmitted includes server-side identification information ID3 which is a combination of the shared identification as described previously and terminal-side identification information ID1. With this, photo data DP received from a plurality of mobile terminals 1 with camera are stored in region Ws of a single virtual film F. Virtual film F can be shared among a family unit, group unit, or community unit. In other words, when virtual film F is used by a family, a family album can be created. Or, by sharing photo data DP among a group or community assembled for some other objective, information exchange and information collection can be achieved efficiently.

The description regarding the management of the film end by virtual film management means 35 is omitted, but it has the same function as in the first embodiment.

In the present embodiment, it is advantageous to provide a charging means. For example, using the charging means indicated in the first embodiment, client specifying information and charging criteria are assigned to usage request data Req of Figure 6(b). With this, server 3 receives usage request data Req and calculates the total for the charging criteria. The charging information, which is this total, is transmitted together with terminal side identification information ID1 to client device 205 and the user. The present system performs smoothly. As a result, having simple charging criteria data and a charge totaling program is adequate.

The allocation of virtual film F in the present embodiment is similar to that of the first embodiment. Based on usage request data Req received by request receiving means 32, allocating means 33 gives exclusive possession of region Ws (W1, W2, ...) in storage 3d of server 3 according to the number of pictures that virtual film F will receive. Allocating means 33 associates region Ws (W1, W2...) with server-side identification information ID3.

For a mode for allocating that is different from that described above, client device 205, which is connected to server 3 via electronic communication line 2, is given in advance exclusive possession of region Ws (W1, W2, ...) within storage 3d of server 3. Region Ws (W1, W2, ...) corresponds to virtual film F which will be provided to users. Afterwards, based on usage request data Req, allocating means 33 associates region Ws (W1, W2,...), which is in exclusive possession by client device 205, with server side identification information ID3.

This mode can be used when virtual film F is treated as a prize for a premium lottery for example. Depending on the scale of the premium lottery, the client purchases from server 3 virtual film F which corresponds to a specified number of photos to be received. The client is given exclusive possession of region Ws (W1, W2, ...) of virtual film F. In particular, for a premium lottery sponsored by the industry, the virtual film can be purchased in accordance with the budget.

Next, the procedure for providing the virtual film of the present embodiment which is implemented according to the above construction is described. However, procedures which overlap with the first embodiment will have the same steps, and their descriptions will be omitted.

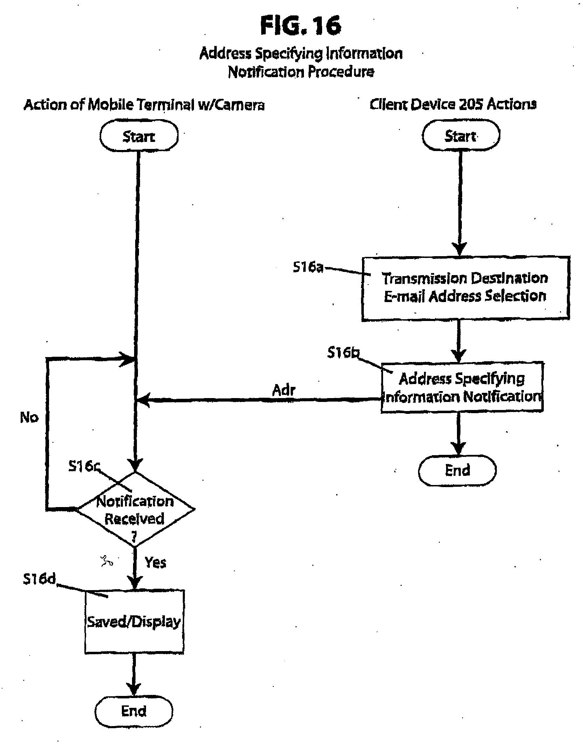

Figure 16 shows a flow chart of an outline of the programs executed in mobile terminal 1 with camera and client device 205 for notification of address specifying information Adr. Following a specific algorithm, client device 205 selects a specific e-mail address Mail from among the e-mail addresses Mail (m1, m2, ...) stored in client device 205 (Step S16a). With the selected e-mail address Mail as the transmission destination, an e-mail in which address specifying information Adr is inputted is sent to mobile terminal 1 with camera to send notification of the address (Step S16b). Mobile terminal 1 with camera awaits notification of address specifying information Adr from client device 205 (Step S16c). When this is received, the address specifying information Adr is stored in internal/external memory device 1b and display part 1f displays that there has been notification of address specifying information Adr (Step S16d). Step S16b corresponds to the notification step of the present invention.

The procedures shown in Figures 7, 8, 9, and 10 of initial connection, usage request of virtual film F, transmission of photo data, management of virtual film F, respectively, are implemented in mobile terminal 1 with camera and server 3 in the present embodiment as well. Their descriptions are omitted here.

As stated in the beginning, in the present embodiment with the above construction and procedures, mobile terminal 1 with camera and server 3 and client device 205 are connected to electronic communication line 2. A specific e-mail address is selected from among e-mail addresses Mail (m1, m2, ...) stored in client device 205. Mobile terminal 1 with camera with this e-mail address Mail is notified of address specifying information Adr which is necessary for usage request of virtual film F. Mobile terminal 1 with camera which has been given this notification executes a usage request of selecting a specific virtual film F from among several types which have been prepared beforehand in server 3. Photo data DP is stored in this virtual film F. Once virtual film F has reached its end, server 3 outputs the photo data DP stored in virtual film F by recording on CD-ROM or printing on a postcard or the like. Region Ws for virtual film F within storage 3d where the outputted photo data was stored is released for reuse.
(B15) For the method of providing the virtual film of the present invention, at least mobile terminal 1 with camera and server 3 are connected through electronic communication line 2. There is a request receiving step (Step S8d) in which server 3 receives the usage request regarding a specific virtual film F (see Figure 15 right) selected from among several types K (see Figure 15 upper left) through mobile terminal 1 with camera and information processing terminal 206. There is an allocating step (Step S8e) in which in order to use the selected virtual film, the virtual film is associated with an identification information, and the server allocates a region Ws for the virtual film. There is a photo data receiving step (Step S9b) in which, based on identification information ID1 of virtual film F, server 3 receives photo data DP sent from mobile terminal 1 with camera at any time (successively or all at once). There is an output step (Step S10d) in which when the film end of virtual film F is reached or subsequent to this, server 3 outputs photo data DP associated with identification information ID1 for virtual film F. As a result, the same advantages as the first embodiment are seen.
(B16) Of course, in this situation as well, a simple construction can be used to store the photo data DP where the photo data is stored in a single type without classification into types K of virtual film F. In this situation, a virtual film F with a limiting film end is used for receiving and storing photo data DP. When this is used up, with output step S10d and second display step S10g, the data is output and at the same time the fact that the film has been used up is made clear. As a result, the virtual film can be used in the same manner as single-use film, and the inconvenience of taking pictures and forgetting about them is avoided. The photo data DP is reliably stored. In this situation as well, modifications can be implemented, such as omitting display step S8h and the like.
(B17) In addition, for the photo data receiving step (Step S9b), server 3 receives photo data sent based on the identification information from a plurality of mobile terminals 1 with cameras. As a result, the virtual film can be shared by a family unit or community unit. In other words, the virtual film can be used together by a family, and a family album or the like can be created. In addition, by sharing photo data among a community assembled for some other objective, information exchange and information collection is achieved efficiently. Of course, this shared mode can be implemented for the first embodiment as well.
(B18) Furthermore, a client device 205 which has address specifying information Adr needed for access of server 3 is connected to electronic communication line 2. There is a notification step (S16b) in which mobile terminal 1 with camera is notified of address specifying information Adr from client device 205. As a result, as long as the client has an information processing device corresponding to client device 205 such as a personal computer or the like and e-mail addresses for customers, the client can notify mobile terminals 1 with camera of address specifying information Adr in order to stimulate the use of virtual film F. Therefore, even if there are no retail stores handling the silver plate film of the prior art, there is still a place for providing users with virtual film F. Depending on the business conditions of the client, an opportunity for using virtual film F is given to mobile terminals 1 with camera of customers from various client devices 205 which exist in a dispersed manner. It is possible to improve usage efficiency of virtual film F. From the point of view of the customer, if virtual film F is given through a premium lottery or the like, this can be incentive for purchasing of new products.
(B19) In particular, if client specifying information related to client device 205 is included in the usage request from mobile terminal 1 with camera, as described previously, the mode of use of virtual film F can be associated with client device 205. As a result, this allows for server 3 to provide an effective means for charging.
(B21) In particular, the notification of address specifying information Adr from client device 205 to mobile terminal 1 with camera is done by e-mail address Mail which is already registered on client device 205. This allows for the effective use of customer lists and the like. As a result, this allows for effective implementation of notification from server 3 to mobile terminal 1 with camera in order to stimulate usage requests.
(B22) Especially, the notification of address specifying information Adr from client device 205 to mobile terminal 1 with camera is conducted with respect to e-mail address Mail selected from among e-mail addresses Mail already registered on client device 205. For example, virtual film F is provided to customers who are winners in a premium lottery. When the limited virtual film F is full (for example when two photos have been received), post cards with the photos is sent to the customer. Expansion of new and useful services such as this can be effectively proposed and provided.

### <Third Embodiment>

In this embodiment, the system construction is the same as in Figure 11. The system is mainly constructed of mobile terminal 1 with camera, electronic communication line 2 such as the internet or the like, server 3, and client device 205.

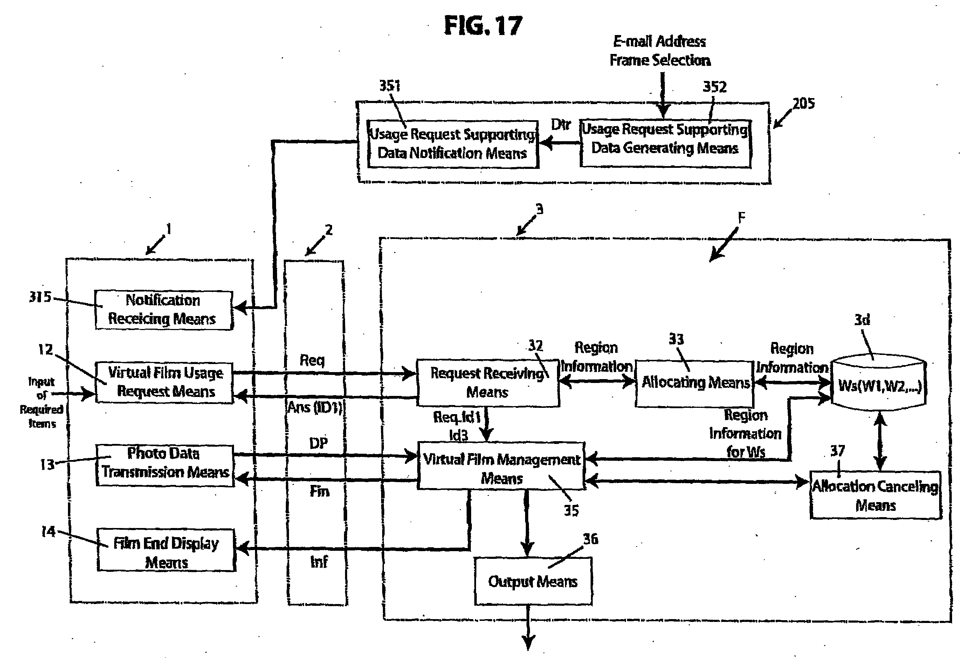

In other words, this embodiment is a system used in the first embodiment in which mobile terminal 1 with camera and server 3 are connected via electronic communication line 2, photo data DP photographed by mobile terminal 1 with camera is stored in region Ws corresponding to virtual film F allocated within storage 3d of server 3, and afterwards, the photo data DP is outputted to the outside. As shown in Figure 17, a client device 205, which is equipped with a usage request supporting data generating means 352 and a usage request supporting data notification means 351, is added via electronic communication line 2. Mobile terminal 1 with camera that receives notification of user supporting data Dtr from client device 205 uses supporting data Dtr to generate usage request data Req. In this situation, the category selection for virtual film F is conducted at client devices 205 installed in stores and event halls for store sales.

In other words, with this system, supporting data Dtr which is created based on e-mail address Mail for mobile terminal 1 with camera which has been externally inputted by client device 205 and the category of virtual film F described later. The e-mail address Mail of mobile terminal 1 with camera is notified of supporting data Dtr by usage request supporting data notification means 351. Receiving notification, mobile terminal 1 with camera generates usage request data Req regarding the virtual film based on supporting data Dtr. Mobile terminal 1 with camera transmits usage request data Req from virtual film usage request means 12 to server 3. At server 3 which receives usage request data Req, allocating means 33 allocates within storage 3d region Ws corresponding to virtual film F. Request receiving means 32 generates terminal-side identification information ID1 and server-side identification information ID3 for virtual film F. Afterwards, virtual film management means 35 records photo data DP sent from mobile terminal 1 with camera to virtual film F and also manages the film end. Once virtual film F reaches the end, outputting means 36 outputs photo data DP stored in virtual film F to an external storage medium OM such as CD-ROM or postcard. Allocation canceling means 37 releases storage 3d of server 3.

In the present embodiment, as with the first embodiment, the concept of virtual film F is encompassed by server-side identification information ID3, film attribute information, and region Ws (W1, W2,...) allocated within storage 3d. The present embodiment will be described concretely. In addition, descriptions for parts which overlap with the first embodiment are omitted, but these parts have the same function as in the first embodiment.

Client device 205 has the same construction as that shown in Figure 13 which has been described previously. CPU205a, together with peripheral hardware resources such as internal/external memory device 205b, input/output interface 205c, communication interface 205d, and the like, performs the roles of usage request supporting data generating means 352 and usage request supporting data notification means 351 shown in Figure 17.

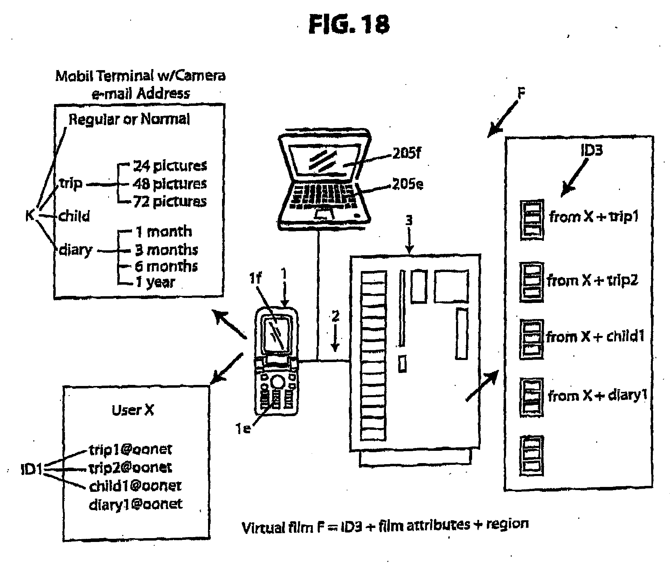

Usage request supporting data generating means 352 is stored in internal/external memory device 205b as an the algorithm of part of a program. While watching display part 205f (left top of Figure 18) displayed by the algorithm and using operation part 205e, the client or the user selects or inputs e-mail address Mail of mobile terminal 1 with camera, category K of virtual film F, end criteria relating to the film end, output format, design and the like. Usage request supporting data generating means 352 guides the operation of the user and client during this time or in other words guides the user and client until the generation of supporting data Dtr. At the same time, address specifying information Adr used for usage request of virtual film F is already stored on client device 205. With the generation of supporting data Dtr by the algorithm, the address specifying information Adr is also incorporated into supporting data Dtr.

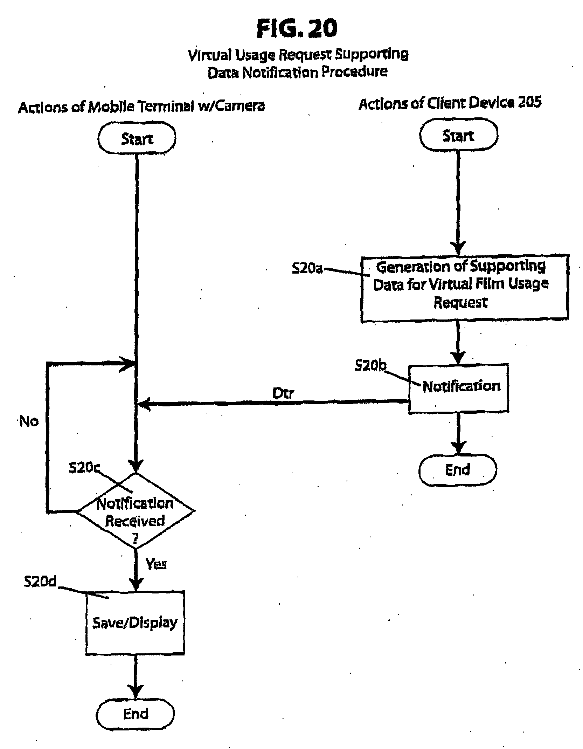

For example, supporting data Dtr for virtual film usage request shown in Figure 19 comprises, in sequence for the left, address specifying information Adr, category K for virtual film F, end criteria relating to the film end, and output format. In this example, the design is not selected or inputted. In addition, the e-mail address Mail is used when notifying supporting data Dtr. As a result, it does not need to be included in supporting data Dtr. Of course, other items such as e-mail address Mail can be included in the items that are selected or inputted, or other items may be substituted.

In addition, with regard to film attribute information such as the end criteria relating to the film end, output format, design, and the like, and category K of virtual film F, these are the same as in the first embodiment. With regard to address specifying information Adr, this is the same as in the second embodiment. The descriptions for all of these are omitted.

Based on the e-mail address Mail, which has been inputted when the client and user were inputting supporting data Dtr in usage request supporting data generating means 352, usage request supporting data notification means 351 sends notification of data Dtr to mobile terminal 1 with camera by addressing to the e-mail address Mail. In other words, in the present embodiment, when supporting data Dtr is generated, client device 205 transmits an e-mail with input or attachment of supporting data Dtr from virtual film usage request data notification means 351. This e-mail is transmitted through electronic communication line 2 such as the internet and the like to e-mail address Mail of mobile terminal 1 with camera. In addition, e-mail address Mail used for the present embodiment is inputted into client device 205. This is different from e-mail address Mail which is registered beforehand in client device 205 in the second embodiment. However, for both e-mail addresses Mail, these are used for notification of address specifying information Adr or supporting data Dtr to mobile terminal 1 with camera, and they are not particularly differentiated here.

The basic construction for mobile terminal 1 with camera is the same as in the first embodiment shown in Figure 2. Its description is omitted here.

As shown in Figure 17, CPU1a of mobile terminal 1 with camera, together with peripheral hardware resources such as internal/external memory device 1b, input/output interface 1c, wireless communication interface 1d, and the like, performs the role of notification receiving means 315 for receiving supporting data Dtr from client device 205, said virtual film usage request means 12 which is for conducting a usage request for virtual film F provided by server 3; a photo data transmission means 13 for transmitting photo data DP of virtual film F; film end display means 14 for displaying the film end.

Each of the aforementioned means of mobile terminal 1 with camera will be described below. However, with regard to film end display means 14, this has the same function as in the first embodiment, and its description is omitted.

In the present embodiment, notification receiving means 315 receives supporting data Dtr transmitted from usage request supporting data notification means 351 of client device 205.

For example, at a retail store, the user purchases virtual film F by specifying details for the application including frame specifying information related to the frame of virtual film F (this will be described later but corresponds to the category and the like of the virtual film) and e-mail address Mail for mobile terminal 1 with camera. In order to provide the user with virtual film F, the application details are inputted into client device 205. After receiving the application details, client device 205 generates supporting data Dtr following the algorithm. An e-mail notification of supporting data Dtr is addressed to mobile terminal 1 with camera. From the e-mail received by notification receiving means 315 of mobile terminal 1 with camera, the user confirms the category K of virtual film F, end criteria relating to the film end, output format, design, and the like which have been inputted by the client and user. In addition, it can be determined whether the wrong person was notified due to a mistake in the e-mail address Mail inputted by the user or client. The aforementioned frame is a unit framework of a screen display in which category K for virtual film F, end criteria for the film end, output format, design, and the like are pre-set. This simply represents one example of a display mode that can be used for easy selection of category K, end criteria, output format, design, and the like.

In mobile terminal 1 with camera, virtual film usage request means 12 incorporates supporting data Dtr with the usage request data generating program which is transmitted as an addition to e-mail as needed. The selection or input columns for the necessary items, and category K of virtual film F, end criteria relating to the film end, output format, design, and the like in supporting data Dtr are displayed in display part 1 f. Based on the details which are selected or input into the input column from the operation part and the supporting data Dtr, usage request data Req for usage request of virtual film F is generated. When usage request data generating program is held in internal/external memory device 1b, this is used. The necessary items which are selected or input in the input columns are, for example, the transmission destination of photo data DP or the output destination. After virtual film F is generated, the URI, which is the address specifying information Adr within supporting data Dtr, is input. Alternatively, if the URI that is input or attached to an e-mail from client device 205 is selected and can be used for the connection for usage request of virtual film F, then this is used. Mobile terminal 1 with camera is connected with server 3 via wireless communication interface 1d. Usage request for virtual film F based on usage request data Req is conducted. In Figure 17, the usage request data used for usage request is represented as Req. Because it goes through mobile terminal 1 with camera, a portion of the information kept in mobile terminal 1 with camera can be extracted to generate usage request data Req and the like. For example, this corresponds to the situation where terminal identification X is extracted to generate terminal side identification information ID1.

Comparing usage request data Req of Figure 6(b) and supporting data Dtr shown in Figure 19, it is clear that, at the least, with usage request data Req, terminal identification X, described later, is substituted for the aforementioned address specifying information Adr in the header part of supporting data Dtr. In other words, film attribute information such as category K of virtual film F and the output format and the like are pre-set by supporting data Dtr generated by client device 205. With virtual film usage request means 12, the user uses the operating part 1e of mobile terminal 1 with camera only to conduct selection or input of necessary items such as transmission destination and the like, and the usage request of virtual film is conducted simply.

As described in the first embodiment, in the header of usage request data Req, a terminal identification X of mobile terminal 1 with camera is assigned. In addition, with regard to terminal identification X, if there are several users of virtual film F, as described in the second embodiment, there can be an identification for the group unit which share the virtual film F. Henceforth, identification for the group unit will be referred to as shared identification.

In addition, although not shown in the present embodiment, in addition to the header which is assigned terminal identification X, client specifying information can be assigned to usage request data Req for example. The client specifying information relates to client device 205 which is the transmission source for the e-mail received by notification receiving means 315. The advantage of assigning client specifying information is the same as in the second embodiment, and the description is omitted here.

The usage request is received by request receiving means 32 of server 3. With request receiving means 32, identification information for virtual film F is assigned. As shown in Figure 17, use data Ans, which includes identification information ID1 of virtual film F, is transmitted to mobile terminal 1 with camera. Mobile terminal 1 with camera which receives use data Ans displays terminal side identification information ID1 of virtual film F in display part 1.

With regard to identification information of virtual film F, as with the second embodiment, terminal side identification information ID1 has the display format of an e-mail address in which the domain name of server 3 and the receiving file name are combined as in Figure 18, for example "trip1@--net". This allows the user to clearly understand that the receiving file is being accessed. However, for the actual receiving file, a character string to show that the access is from terminal identification X is added to the apparent receiving file, as in "fromX+trip1", and the like. In the present embodiment, henceforth, the combination of terminal identification X and terminal side identification information ID1 will be referred to as the server side identification information ID3 for virtual film F. Furthermore, when a plurality of mobile terminals 1 with cameras share virtual film F, server-side identification information ID3 is a combination of the shared identification and terminal-side identification information ID1.

The photo data transmission means 13 shown in Figure 17 is the same as described for the second embodiment. The user selects the desired identification information ID1 for virtual film F, and the photo data DP is transmitted to the virtual film F specified by identification information ID1. In particular, photo data DP may be sent individually or as a batch. In addition, by having a plurality of mobile terminals 1 with cameras share the identification information ID1, photo data DP is transmitted from a plurality of mobile terminals 1 with cameras to a specific virtual film F.

Server 3 has the same construction as that shown in Figure 5, and its description is omitted. CPU3a inside server 3, together with peripheral hardware resources such as internal/external memory device 3b and storage 3d and the like, performs the roles of request receiving means 32, allocating means 33, virtual film management means 35, output means 36, and allocation canceling means 37.

Of each of the means of server 3 mentioned above, descriptions for allocating means 33, output means 36, allocation canceling means 37 are omitted, but they have the same function as in the first embodiment. Request receiving means 32 and virtual film management means 35 are described below.

Request receiving means 32 is basically the same as in the second embodiment and receives usage request data Req shown in Figure 6(b) from mobile terminal 1 with camera. By a program which starts up with the receipt of Req, terminal-side identification information ID1 and server-side identification information ID3 for virtual film F are issued, and film management information Rec of Figure 6(c) is generated. As shown in Figure 18, terminal-side identification ID1 for virtual film F is transmitted to mobile terminal 1 with camera. Figure 6(d) shows the transmitted data.

For this film management information Rec, this is a record in which category K (for example "trip") and film attribute information (for example 24 photographs, album) selected by the user are added to identification information ID1, ID3, and these are further linked to the number of remaining number of photos (default of 24) and region information of region Ws allocated on storage 3d by allocating means 33. However, as long as they are necessary items for the convenience of virtual film management, other items can be included in film management information Rec. For example, as described in the second embodiment, by including client specifying information in film management information Rec, this is effective in improving the usage rate for virtual film F.

Virtual film management means 35 is the same as in the second embodiment. Virtual film management means 35 manages film management information Rec which contains usage request data Req for virtual film F received from request receiving means 32, terminal-side identification information ID1, server-side identification information ID3, and region information regarding the allocated region Ws.

Virtual film management means 35 receives photo data DP sent at any time from mobile terminal 1 with camera to a specified e-mail address. In the present embodiment, when sending photo data DP from mobile terminal 1 with camera, the photo transmission data includes server-side identification information ID3 for virtual film F as shown in Figure 6(e). With this ID3, it is possible to retrieve automatically from film management information Rec of Figure 6(c) the region information for virtual film F which is the storage site for photo data DP. The received photo data is stored in region Ws of the corresponding virtual film F.

With regard to the receiving of photo data DP, photo transmission data, comprising server side identification ID3 and a plurality of photo data DP, is received. As a result, a plurality of photo DP is transmitted from mobile terminal 1 as a batch. By receiving photo transmission data which includes server-side identification information that is a combination of the shared identification and terminal side identification information ID1, a plurality of mobile terminals 1 with cameras share the same virtual film F. The advantages for these are the same as in the second embodiment, and the descriptions are omitted.

In addition, the description regarding the film end which is managed by virtual film management means 35 is omitted, but this has the same function as in the first embodiment.

In the present embodiment, having the same charging means as the second embodiment is effective. For example, using the charging means indicated in the first embodiment, by assigning client specifying information and charging criteria to usage request data Req of Figure 6(b), the charging information together with terminal side identification information ID1 can be transmitted to the user and client device 205. The present system is carried out smoothly.

The general idea of allocation is the same as in the second embodiment.

Next, the procedure for providing virtual film of this embodiment which is implemented based on the above construction is described. However, with regard to the procedures which overlap with the first embodiment, these will have the same steps, and their descriptions are omitted.

Figure 20 shows a flow chart of an outline of programs executed at mobile terminal 1 with camera and client device 205 in order to send notification of supporting data Dtr. Following a certain algorithm, client device 205 generates supporting data Dtr (Step S20a) based on frame specifying information and address specifying information Adr. Frame specifying information relates to the frame of virtual film which is input into client device 205. Address specifying information is stored in client device 205. Afterwards, client device 205 transmits to mobile terminal 1 with camera an e-mail with input or an attachment of supporting data Dtr (Step S20b). The e-mail is being transmitted to the inputted e-mail address Mail. Mobile terminal 1 with camera awaits notification of supporting data Dtr from client device 205 (Step S20c). Once this is received, supporting data Dtr is stored in internal/external memory device 1b, and display part 1f displays that notification of supporting data Dtr has been received (Step S20d). Step S20b corresponds to the notification step of the present invention.

After notification of usage request supporting data is received, the outline of the programs executed at mobile terminal 1 with camera and server 3 for the usage request of virtual film F is the same as in the flow chart of Figure 8. In other words, virtual film usage request means 12 generates usage request data Req (Step S8a) following a prescribed algorithm based on the selection input operation of the user and supporting data Dtr. Awaiting a transmission command from the user (Step S8b), the usage request data Req is transmitted to server 3 (Step S8c). When server 3, which has been waiting the usage request, receives usage request data Req (Step S8d), the terminal side identification information ID1 and server side identification information ID3 of virtual film F are assigned (Step S8z). In storage 3d of server 3, allocation of region Ws with the server side identification information ID3 of virtual film F is conducted (Step S8e). The terminal side identification information 1D1 for virtual film F is transmitted to mobile terminal 1 with camera (Step S8f). After sending usage request data Req, mobile terminal 1 with camera awaits the transmission of terminal side identification information ID1 (Step S8g), and once this is received, it is displayed on display part 1f (Step S8h), and then this is the end. Step S8d corresponds to the request receiving step of the present invention. Step S8e corresponds to the allocation step of the present invention. Step S8f corresponds to the first transmission step of the present invention. Step S8h corresponds to the first display step.

Afterwards, the transmission of photo data DP and the programs executed at mobile terminal 1 with camera and server 3 for management of virtual film F is the same as shown in the flow chart of Figures 9 and 10.

As described in the beginning, with the present embodiment having the above construction and procedures, mobile terminal 1 with camera and server 3 and client device 205 are connected to electronic communication line 2. Based on the frame of virtual film F which is input by the client, the e-mail address Mail of mobile terminal 1 with camera, and address specifying information Adr stored in client device 205, client device 205 generates supporting data Dtr for usage request of virtual film F. Based on e-mail address Mail, the supporting data Dtr is input or attached to an e-mail, and this notification is sent to mobile terminal 1 with camera. Once mobile terminal 1 receives the notification, usage request with respect to virtual film F is created based on supporting data Dtr. Photo data DP is kept in virtual film F. Once virtual film F is finished, server 3 outputs the photo data DP stored in virtual film F by recording on CD-ROM or the like. Region Ws of virtual film F within storage 3d was used for storing photo data DP which has been output, and in order to reuse region Ws, it is released.
(B18) Furthermore, client device 205 holds address specifying information Adr which is necessary for access to server 3. Client device 205 is connected to electronic communication line 2. A notification step (S20b) sends notification of supporting data, which includes address specifying information Adr, from client device 205 to mobile terminal 1 with camera. As a result, as long as the client has an information processing device such as a personal computer and the like corresponding to client device 205 and has a program for generating supporting data Dtr, notification of supporting data Dtr can be sent to mobile terminal 1 with camera. Notification of supporting data Dtr is for stimulating the providing of virtual film F. Therefore, at store fronts of retail stores handling silver plate film of the prior art and other stores and event halls and the like, a place for providing users with virtual film F is ensured. Depending on the business conditions of the client, an opportunity for requesting use of virtual film F is given to mobile terminals 1 with camera of customers from various client devices 205 which exist in a dispersed manner. It is possible to further improve usage efficiency of virtual film F.
(B19) In particular, if client specifying information related to client device 205 is included in the usage request from mobile terminal 1 with camera, as described previously, the mode of use of virtual film F can be associated with client device 205. As a result, this allows for server 3 to provide an effective means for charging.
(B20) In particular, notification step S20b from client device 205 to mobile terminal 1 with camera is a notification of supporting data Dtr which includes address specifying information Adr and information such as category of virtual film F, film end and the like. Supporting data Dtr is for helping with the usage request from mobile terminal 1 with camera to server 3. As a result, when requesting use from mobile terminal 1 with camera to server 3, the operation is extremely simple with no effort involved.

### <Fourth embodiment>

The basic system for this embodiment is the same as in the first embodiment. Descriptions with respect to the basic construction and actions of each part are omitted.

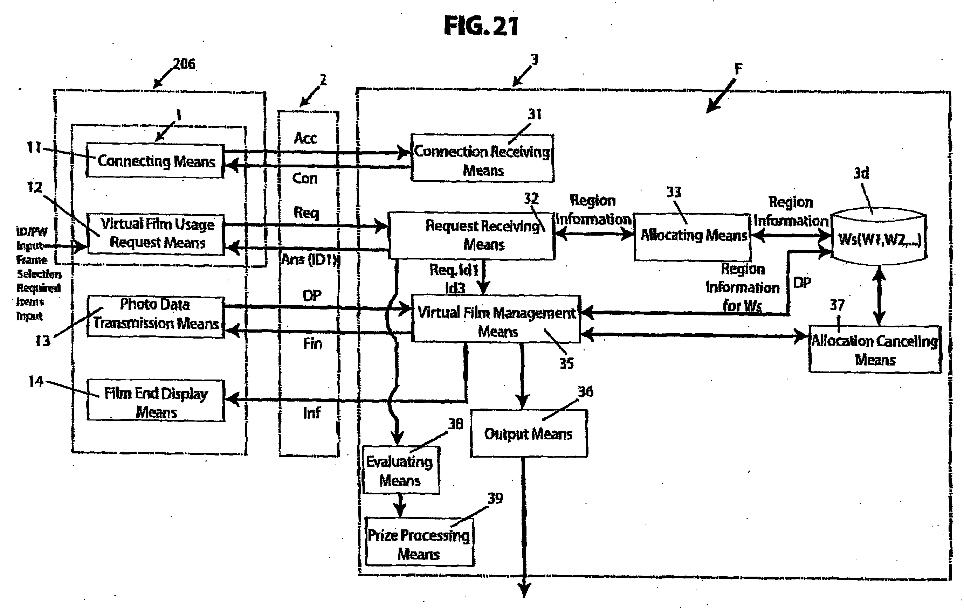

In this system, CPU3a, which is a component of server 3 shown in Figure 5, together with peripheral hardware resources such as internal/external memory device 3b, storage 3d and the like, performs the role of evaluating means 38 and prize processing means 39 shown in Figure 21.

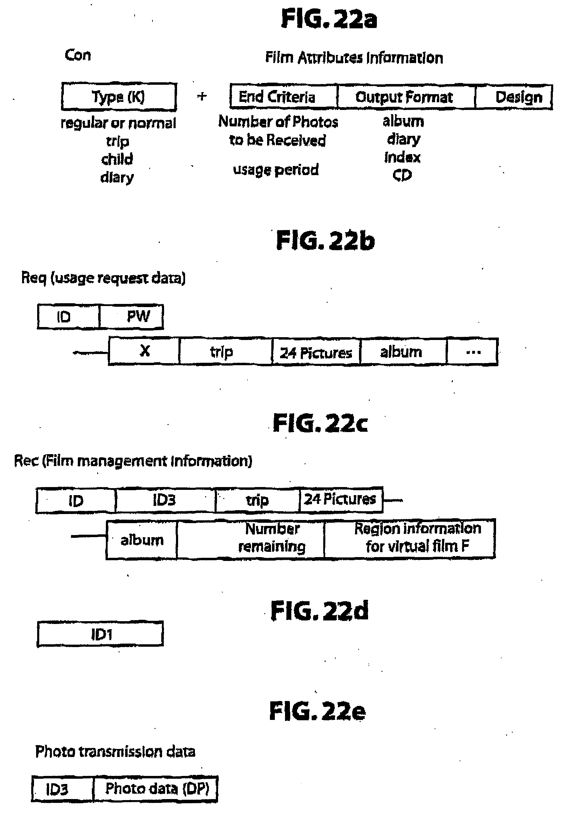

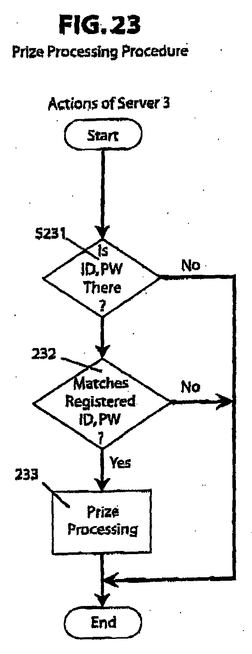

In evaluating means 38, a specific ID, PW are registered in advance as prize specifying information in internal/external memory device 3b. With request receiving means 32, when an usage request is received, an evaluating step evaluates whether or not the ID, PW in usage request data Req of the virtual film shown in Figure 22(b) matches ID, PW that is registered (Figure 23, step S231, S232). If it is evaluated to be a match, prize processing means 39 implements prize processing step S233. In the prize processing step, as an example, virtual film F is provided for free (in other words, if there is a charging item, this has the value of no charge), and as the output for output means 36, an album or another item is provided for free. Steps S231-S233 are preferably implemented in between Step S8d and Step S8z of Figure 8, but the present invention is not limited to this. In addition, when there are several types of prizes, in the prize specifying information, there should be included information explicitly stating which prize.

By constructing such a system, this is advantageous for use as bonus prizes. For example, prize labels or prize stickers are attached to products such as canned coffee drinks sold in stores. When there is a prize winner, the prize label or prize sticker gives the customer information regarding the URL of server 3 as well as information relating to acquiring the aforementioned ID, PW. The customer accesses the URL, and by transmitting the acquired ID, PW, server 3 confirms that this is a winner for the specific product. Suitable prize processing is conducted, such as conducting the necessary processes for outputting and delivering the photo data to an album. This has the effect of a sales promotion for a product

The concrete construction for each of the parts is not limited to the above embodiments. Various modifications are possible without departing from the spirit of the present invention. For example, for a virtual film that is limited to 24 pictures, when the film end is reached, for the output, there can be modes in which a normal photo printing is conducted for each cut, or the photo printing can be conducted in the format of thumbnails or other index format. The outputted photos can be sent to a specified transmission destination as described previously, and offered for use by the user, and a print request receiving step can be on standby for the next printing request.

### Possibility of use in industry

As described above, according to the present invention, a concept of virtual film is introduced, thereby realizing a method for providing a novel, useful virtual film that allows the user to store photos without expending time and effort and that reduces the post-processing so that the management at the server is easier. The present invention also provides a server and a mobile terminal with camera.

## Claims

1. A method for providing a virtual film, in which said method is implemented by connecting a mobile terminal with camera to a server through an electronic communication line, comprising:
a request receiving step, in which said server receives a request for using a specific virtual film selected from among a plurality of types of virtual film displayed on said mobile terminal with camera;
an allocating step, in which, in order to use said selected virtual film, said virtual film is associated with an identification information, and said server allocates a region for said virtual film;
a photo data receiving step, in which, based on identification information of said virtual film, said server receives photo data as taken from said mobile terminal with camera;
an outputting step, in which when the end of said virtual film is reached or subsequent to this, said server outputs said photo data associated with said identification information for said virtual film.

2. A method for providing virtual film as described in Claim 1, comprising:
a first display step, in which, at least when a request for using said virtual film is received by said server, said identification information of said virtual film is displayed on said mobile terminal with camera.

3. A method for providing virtual film as described in Claim 1 or 2, comprising:
a second display step, in which, when the end of said virtual film is reached of subsequent to this, there is a display on mobile terminal with camera conveying that virtual film of said identification information is used up.

4. A method for providing virtual film as described in Claim 1, comprising:
a first transmission step, in which, at least when a request for using said virtual film is received by said server, said server transmits, to said mobile terminal with camera, said identification information of said virtual film.

5. A method for providing virtual film as described in Claims 1 or 4, comprising:
a second transmission step, in which when the end of said virtual film is reached or subsequent to this, said server transmits, to said mobile terminal with camera, conveying that virtual film of said identification information is used up.

6. A method for providing virtual film as described in Claims 1-5, wherein:
in said request receiving step, said server receives a request for using a specific virtual film selected from among a plurality of types of virtual film classified in advance by said server.

7. A method for providing virtual film as described in Claim 6, wherein:
said plurality of types is classified according to photo genre.

8. A method for providing virtual film as described in Claim 7, wherein:
said identification information of said virtual film includes said photo genre name as a character string.

9. A method for providing virtual film, in which said method is implemented by connecting a mobile terminal with camera to a server through an electronic communication line, comprising:
a request receiving step, in which said server receives, from said mobile terminal with camera, a request for using a virtual film with a limiting film end;
an allocating step, in which, in order to use said requested virtual film, said virtual film is associated with an identification information, and said server allocates a region for said virtual film;
a photo data receiving step, in which said server receives photo data as taken from said mobile terminal with camera;
an outputting step, in which when the end of said virtual film is reached or subsequent to this, said server outputs said photo data received by said server.

10. A method for providing virtual film as described in Claim 1 or 9, wherein:
said film end is regulated by when the number of photos received reaches a set number.

11. A method for providing virtual film as described in Claim 10, comprising:
an intermediate display step, in which, of the number of photo data that can be received, the number of photos remaining in said virtual film is displayed on said mobile terminal with camera.

12. A method for providing virtual film as described in Claim 1 or 9, wherein:
said film end is regulated by when a set interval of time has passed from a receiving time period for said photo data.

13. A method for providing virtual film as described in Claim 1 or 9, wherein:
said photo data is output to an external storage medium.

14. A method for providing virtual film as described in Claim 1 or 9, wherein:
output of said photo data is transmitted to a desired transmission destination through said electronic communication line.

15. A method for providing a virtual film, in which said method is implemented by connecting, at the least, a mobile terminal with camera to a server through an electronic communication line, comprising:
a request receiving step, in which said server receives a request for using a specific virtual film selected from among a plurality of types of virtual film;
an allocating step, in which, in order to use said selected virtual film, said virtual film is associated with an identification information, and said server allocates a region for said virtual film;
a photo data receiving step, in which, based on identification information of said virtual film, said server receives photo data sent from said mobile terminal with camera;
an outputting step, in which when the end of said virtual film is reached or subsequent to this, said server outputs said photo data associated with said identification information for said virtual film.

16. A method for providing virtual film, in which said method is implemented by connecting, at the least, a mobile terminal with camera to a server through an electronic communication line, comprising:
a request receiving step, in which said server receives a request for using a virtual film with a limiting film end;
an allocating step, in which, in order to use said requested virtual film, said virtual film is associated with an identification information, and said server allocates a region for said virtual film;
a photo data receiving step, in which said server receives photo data sent from said mobile terminal with camera;
an outputting step, in which when the end of said virtual film is reached or subsequent to this, said server outputs said photo data received by said server.

17. A method for providing virtual film as described in Claims 1, 9, 15, or 16, wherein:
with said photo data receiving step, said server receives photo data sent, based on said identification information, from a plurality of said mobile terminals with camera which share said identification information of said virtual film.

18. A method for providing virtual film as described in Claims 15-17, wherein:
a client device which is holding address specifying information that is necessary for server access is connected to said electronic communication line;
a notification step is implemented in which there is notification of said address specifying information to said mobile terminal with camera from said client device.

19. A method for providing virtual film as described in Claim 18, wherein:
client specifying information relating to said client device is included in said usage request from said mobile terminal with camera.

20. A method for providing virtual film as described in Claim 18 or 19, wherein:
a notification step, which is effected from said client device to said mobile terminal with camera, is for notification of supporting data which includes information relating to address specifying information and virtual film, and is for supporting the usage request from said mobile terminal with camera to said server.

21. A method for providing virtual film as described in Claims 18 or 19, wherein:
said notification of address specifying information from said client device to said mobile terminal with camera is conducted with respect to e-mail addresses already registered in said client device.

22. A method for providing virtual film as described in Claims 18 or 19, wherein:
notification of address specifying information from said client device to said mobile terminal with camera is conducted with respect to an e-mail address selected from e-mail addresses already registered in said client device.

23. A method for providing virtual film as described in Claims 15 or 16, wherein:
said server holds in advance prize specifying information;
during request receiving step or before or after this step, there is evaluation of whether or not data relating to said prize specifying information is included;
if prize specifying information is included, a corresponding prize processing step is implemented.

24. A server, in which said server is connected to a mobile terminal with camera through an electronic communication line, comprising:
a means for receiving request, in which a request for using a specific virtual film selected from among a plurality of types of virtual film displayed on said mobile terminal with camera is received;
a means for allocating, in which, based on said request, a region which corresponds to said virtual film and which can be identified by identification information for said virtual film is allocated;
a means for film management, which receives photo data sent as taken from said mobile terminal with camera and stores said photo data in said corresponding region for said virtual film which is identified by said identification information and, in addition, at the least, manages the film end of said virtual film;
a means for outputting, in which when the end of said virtual film is reached or subsequent to this, said photo data stored in said region of said virtual film is outputted;
a means for canceling allocation, in which, when said film end managed by said virtual film management means is reached or subsequent to this, the allocation for said region for said virtual film is cancelled.

25. A server, in which said server is connected to a mobile terminal with camera through an electronic communication line, comprising:
a means for receiving request, in which a request for using a virtual film which has a limiting film end is received from said mobile terminal with camera;
a means for allocating, in which, based on said request, a region which corresponds to said virtual film and which can be identified by identification information for said virtual film is allocated;
a means for film management, which receives photo data sent as taken from said mobile terminal with camera and stores said photo data in said corresponding region for said virtual film which is identified by said identification information and, in addition, at the least, manages the film end of said virtual film;
a means for outputting, in which when the film end, which is managed by virtual film management means, is reached or subsequent to this, said photo data stored in said region of said virtual film is outputted;
a means for canceling allocation, in which, when said film end managed by said virtual film management means is reached or subsequent to this, the allocation for said region for said virtual film is cancelled.

26. A server as described in Claims 24 or 25, wherein:
said virtual film management means regulates said film end of said virtual film by when the number of photos received reaches a set number.

27. A server as described in Claims 24 or 25, wherein:
said virtual film management means regulates said film end of said virtual film by when a set interval of time has passed from a receiving time period for said photo data.

28. A server as described in Claims 24-27, wherein:
said output means copies or transfers said photo data stored in said region of said virtual film to an external storage medium.

29. A server as described in Claims 24-27, wherein:
said output means transmits said photo data stored in said region of said virtual film to a desired transmission destination.

30. A server as described in Claims 24-29, wherein:
said request receiving means receives a request for using a specific virtual film selected from among a plurality of types of virtual film which have been classified in advance;
said allocating means allocates said region of said virtual film such that said region is identifiable by said identification information for said virtual film which includes said photo genre name.

31. A method for providing a virtual film, in which said method is implemented by connecting a mobile terminal with camera to a server through an electronic communication line, comprising:
a request receiving step, in which said server receives a request for using a specific virtual film selected from among a plurality of types of virtual film displayed on said mobile terminal with camera;
a first display step, in which, at least when said request for using said virtual film is received by said server, said identification information for said virtual film is displayed on said mobile terminal with camera;
a photo data receiving step, in which based on identification information of said virtual film, said server receives photo data as taken from said mobile terminal with camera.

32. A method for providing a virtual film, in which said method is implemented by connecting a mobile terminal with camera to a server through an electronic communication line, comprising:
a request receiving step, in which said server receives a request for using a specific virtual film selected from among a plurality of types of virtual film displayed on said mobile terminal with camera;
a first transmission step, in which, at least when said server receives a request for using said virtual film, said server transmits to said mobile terminal with camera said terminal-side identification information for said virtual film which corresponds to receiving said request;
a photo data receiving step, in which based on said terminal-side identification information for said virtual film, said server receives photo data as taken from said mobile terminal with camera.

33. A method for providing virtual film as described in Claims 31 or 32, comprising:
an outputting step, in which, when the film end of said virtual film is reached or subsequent to this, said server outputs said photo data associated with said identification information for said virtual film.

34. A method for providing virtual film as described in Claims 31-33, comprising:
a second display step, in which, when the end to said film is reached or subsequent to this, there is a display on said mobile terminal with camera conveying that virtual film of said identification information is used up.

35. A method for providing virtual film as described in Claims 31-34, comprising:
a second transmission step, in which, when the end to said film is reached or subsequent to this, said server transmits to said mobile terminal with camera conveying that virtual film of said identification information is used up.

36. A mobile terminal with camera, in which said mobile terminal with camera is connected to a server through an electronic communication line, comprising:
a means for requesting use of virtual film, in which usage request data regarding a specific virtual film selected from among a plurality of types of virtual film is transmitted to said server;
a means for transmitting photo data, in which selection input from the user with respect to identification information for said virtual film is received and photo data is transmitted to said virtual film of said server specified by said identification information.

37. A mobile terminal with camera as described in Claim 36, wherein:
in said virtual film usage requesting means, identification information for said virtual film is displayed in a display part.

38. A mobile terminal with camera as described in Claims 36 or 37, wherein:
said virtual film usage requesting means receives, from said server, identification information for a plurality of types of virtual film which has been classified in advance.

39. A mobile terminal with camera as described in Claims 36-38, comprising:
a means for displaying the film end, in which, when the end to said film is reached or subsequent to this, there is a display on said display part conveying that virtual film of said identification information for said virtual film is used up.

40. A server, in which said server is connected to a mobile terminal with camera through an electronic communication line, comprising:
a means for receiving request, in which a request for using a specific virtual film selected from among a plurality of types of virtual film is received;
a means for allocating, in which, based on said request, a region which corresponds to said virtual film and which can be identified by identification information for said virtual film, is allocated;
a means for film management, which receives photo data sent from said mobile terminal with camera and stores said photo data in said corresponding region for said virtual film which is identified by said identification information and, in addition, at the least, manages the film end of said virtual film;
a means for outputting, in which when said film end managed by said virtual film management means is reached or subsequent to this, said photo data stored in said region of said virtual film is outputted;
a means for canceling allocation, in which, when said film end managed by said virtual film management means is reached or subsequent to this, the allocation for said region for said virtual film is cancelled.

41. A server, in which said server is connected to a mobile terminal with camera through an electronic communication line, comprising:
a means for receiving request, in which a request for using a virtual film which has a limiting film end is received from said mobile terminal with camera;
a means for allocating, in which, based on said request, a region which corresponds to said virtual film and which can be identified by identification information for said virtual film is allocated;
a means for film management, which receives photo data sent from said mobile terminal with camera and stores said photo data in said corresponding region for said virtual film which is identified by said identification information and, in addition, at the least, manages the film end of said virtual film;
a means for outputting, in which when the film end which is managed by said virtual film management means is reached or subsequent to this, said photo data stored in said region of said virtual film is outputted;
a means for canceling allocation, in which, when said film end managed by said virtual film management means is reached or subsequent to this, the allocation for said region for said virtual film is cancelled.
